# EUROPEAN PATENT SPECIFICATION

(11) **EP 3 312 349 B1**
(45) Date of publication and mention of the grant of the patent: **31.08.2022**
(21) Application number: 17197458.7
(22) Date of filing: 20.10.2017
(51) Int. Cl.: E02D 31/00

(54) **CENTURY LASTING MOISTURE BARRIER, USE OF THE MOISTURE BARRIER AND METHOD FOR CONSTRUCTING THE SAME**
EIN JAHRHUNDERT HALTBARE FEUCHTIGKEITSSPERRE, VERWENDUNG DER FEUCHTIGKEITSSPERRE UND VERFAHREN ZUR KONSTRUKTION DAVON
BARRIÈRE D'HUMIDITÉ DURABLE PENDANT PLUSIEURS SIÈCLES, UTILISATION DE LA BARRIÈRE D'HUMIDITÉ ET SON PROCÉDÉ DE CONSTRUCTION

(30) Priority: 21.10.2016 NL 2017653
(43) Date of publication of application: 25.04.2018
(73) Proprietor: Attero B.V., 6081 NT Haelen (NL)
(72) Inventor: HEIJNEN, Jozef Frans Maria, 6081 NT Haelen (NL); PEEKS, Willem, 6081 NT Haelen (NL); VERSLUIS, Edwin Jeroen, 6081 NT Haelen (NL)
(74) Representative: Nederlandsch Octrooibureau

(56) References cited:
- WO-A1-2016/114951
- US-A- 5 816 748

## Description

### TECHNICAL FIELD OF THE INVENTION

The present invention concerns the field of preventing moisture from entering a landfill and preventing percolate from escaping by covering the landfill with a moisture barrier of the invention. More specifically, the invention relates to a moisture barrier which maintains its barrier function for at least 100 years. Furthermore, the invention concerns the method for providing such century lasting moisture barrier, and the use of such moisture barrier in preventing moisture from entering a landfill and from escaping said landfill for at least ten decades. The invention further concerns a procedure to provide proof and verification to the fact that the technical functionality of the moisture barrier on a landfill is maintained for a lifespan of at least 100 years.

### BACKGROUND OF THE INVENTION

A tremendous concern with regard to landfills is how to adequately protect the environment from hazardous secretion of percolate from the landfill for a sufficiently prolonged period of time.

When a landfill, or dump, comprising for example a package of industrial waste and/or waste produced by households, has for example reached its storage capacity, the further and/or future exposure of the environment to hazardous compounds comprised by the landfill most often is prevented by a way of coverage on the landfill. Typically, the landfill is covered at the top surface and at the descending sides exposed to open air with a laminar barrier comprising one or more layers of material impermeable for moisture for at least a predetermined length of time. The laminar moisture barrier not only prevents percolate present in the landfill from egressing to the environment. The laminar moisture barrier acts as a barrier for precipitation such as rainwater from entering the landfill. Thereby, the laminar moisture barrier protects the environment surrounding the landfill from precipitation entering the landfill and subsequently rinsing out any hazardous percolate from the landfill and into the landfill's environment. Apart from monitoring a moisture barrier covering a landfill in time, monitoring moisture barrier quality with regard to preventing transfer of moisture already starts before the laminar moisture barrier is built up and also during build-up of the moisture barrier. Each and every material applied in the laminar barrier has a certain lifespan with regard to *e.g*. resistance to leakage of percolate moisture through the consecutive lamella of materials. Amongst various factors such as exposure to UV light, oxidation by exposure to air, one of the important factors determining the life span of a moisture barrier is the exposure of the various lamella, or layers, of different materials applied in the moisture barrier to the percolate retained in the landfill and affecting the physicochemical characteristics of the materials. The material in a certain layer of the moisture barrier having the lowest resistance to breakdown of its moisture barrier function by exposure to percolate determines the life span of a laminar moisture barrier on a landfill.

All materials applied in subsequent layers in a laminar moisture barrier covering a landfill are at forehand selected based on their respective physicochemical characteristics *ex situ.* Furthermore, a batch of a material is subjected to inspection measures before application in the moisture barrier. During the construction of the laminar barrier, each layer of material is subjected to visual inspection and random testing by a notified and accredited institution while being applied on the landfill, and shortly thereafter, before a subsequent layer of material is applied, typically fully covering the previous layer of material. In addition, when a layer of material is applied on the landfill, the quality of the layer with respect to resistance to moisture passage is assessed at forehand *ex situ* by conducting predetermined and protocolled measurements. Only when a layer of material has passed this quality measures, that layer is applied in the moisture barrier.

Often, the predetermined and protocolled quality measures are based on calculations comprising theoretical values and assumptions. A determined lifespan with regard to resistance to passage of moisture through a layer of material is therefore often not solely or mainly based on measured parameters and laboratory experiments and/or field experiments, let alone based on quality measures assessed with the materials after application in the moisture barrier on the site of the landfill.

Nowadays moisture barriers on landfills have a calculated lifespan of 50 to 75 years. Such a lifespan means that each 50 to 75 years, the moisture barrier should be replaced, notwithstanding any measures taken during said lifespan with regard to *e.g.* local mending of one or more of the laminar layers. As said, nowadays, such calculated lifespan is at least in part based on theoretically determined measures. It might well be that for certain moisture barriers on landfills the effective life span is in fact prolonged. Whether indeed the effective life span is in fact prolonged for a certain moisture barrier on a landfill, cannot be assessed with the measures nowadays available to the skilled person.

Typically, a laminar moisture barrier for a landfill comprises a backing layer. Such a backing layer is most often provided in direct contact with the package of dump and functions amongst others to level and smoothen the outer surface of the landfill. Typically, a laminar moisture barrier for a landfill further comprises a mineral layer and a synthetic layer such as a layer of foil, both functioning in a blockage of transfer of moisture from inside out and from outside in the landfill. Typically, a moisture barrier comprises a way of discharging water precipitated at the barrier outer surface, *e.g.* a drainage mat. Furthermore, for example for aesthetic reasons and also for reasons of shielding of the laminar layers building up the barrier for wind and temperature, sunlight and demolition, the landfill is covered with a package of (fertile) soil, as part of the laminar moisture barrier. Such layer of soil is then functioning as the most outer layer of the moisture barrier, exposed to air and precipitation. Vegetation in the layer of soil then aids in preventing erosion and partially in retaining precipitation and thereby preventing at least in part water from reaching the subsequent layers underneath.

The surface area of landfills exposed to the air is typically in the order of magnitude of one to several hectares, *e.g*. 10 to 200 hectares. Synthetic foil is typically applied as the synthetic layer in moisture barriers covering a landfill. Since foil is not manufactured as sheets with a similar surface area of at least a hectare, covering a landfill with a foil requires welding of consecutively positioned strips of foil at the landfill. Typically, strips of foil have a width of 5 to 7,5 meters and a length of between several tens of meters to a hundred meters. Therefore, fully covering the surface area of a landfill requires typically hundreds of meters of welding. Herewith, the quality of the welds is most often the determining factor with regard to the life span of the complete laminar moisture barrier. The (theoretically determined) life span of the backing layer, the mineral layer, the *e.g*. drainage mat and the covering layer at the top, is nowadays in the range of about 75 to 100 years or even longer. However, the total life span of a moisture barrier is set to a shorter period of time due to the lack of robust measures to assess the lifespan of the (supposedly) weakest link, *i.e.* the synthetic layer. Although measurements are applied in order to assess the lifespan of the synthetic layer to some extent, these measurements only assess the quality of the synthetic layer by assessing the quality of the welds in the synthetic layer in a binary fashion. Either a weld has been made up to the standard, *i.e.* a weld is made that adheres consecutive strips of synthetic material, *e.g.* foil, over their full length. Or the weld is not up to standard, as is clear from its weak resistance to peeling in an adequate experiment assessing said resistance to peeling, or as is clear from non-uniform welds along the full length of contact between consecutive strips of foil, as assessed by visual inspection. These measurements thus assess the quality of the welds solely at the moment of manufacture of the moisture barrier. These measurements thus supply no adequate insight in the quality of the weld after manufacturing the barrier and when the years go by. Thus, nowadays no information is available on the moisture barrier function of the synthetic layer in time.

United States of America patent US 5,816,748, granted in 1998, titled *"method for sealing off ground sites",* pertains to a process for sealing off ground sites in particular a waste dump, abandoned dumping grounds, pipelines or the like, or also excavated construction sites, using sealants, wherein a boring technique is used to drive at least one bore underneath the ground site from the surface outside the ground site and the sealant is injected into the soil surrounding the bore. To implement the process, jets for injecting the sealant into the soil are mounted on the steerable remote-controlled boring head.

Hence, a need exists for measures to assess the life span of a moisture barrier covering a landfill with regard to its moisture barrier function, that are based on experimental data, instead of relying on theoretical data and assumptions. In addition, and more specifically, a need remains for measures that overcome the weakest link in assessing the life span of a moisture barrier covering a landfill, *i.e.* with regard to the quality of the synthetic layer in a moisture barrier. Further, a need exists for methodology for reliably assessing the technical lifespan of the mineral layer of a laminar moisture barrier on a landfill.

### SUMMARY OF THE INVENTION

The present invention provides a method to assess the life span of a moisture barrier covering a landfill with regard to its moisture barrier function, which method addresses the shortcomings of current more theoretical ways to determine the life span. The method of the invention encompasses field data and laboratory data, contributing to a more accurate assessment and a more reliable assessment of the life span of a moisture barrier than provided by current methods.

A first aspect of the present invention relates to a method for providing a moisture barrier (10) for protecting a landfill (6) from penetration and/or egression of moisture, comprising the steps of:
a) providing a backing layer (1) for covering the landfill; a mineral layer (2) for covering said backing layer; a synthetic layer (3) for covering said mineral layer; a drainage layer (4) for covering said synthetic layer; and a top layer (5) for covering said drainage layer;
b) covering said landfill in consecutive order with the backing layer, the mineral layer, the synthetic layer, the drainage layer and the top layer, characterized in that the sodium adsorption ratio in the backing layer is determined before covering the backing layer on the landfill with the mineral layer, with the sodium adsorption ratio having a value below 8, and wherein said mineral layer has a hydraulic conductivity of between 3,86E-10 and 1E-12 m/s; and in that
   for the synthetic material in the synthetic layer the following is determined:
   i. the tensile strength after 0 hours and after between 1.000 to 3.000 hours incubation at 100°C, said tensile strength being at least 250 kJ/m² at all time-points;
   ii. the strength in a tensile impact test after 0 hours and after between 1.000 to 3.000 hours incubation at 100°C, said strength in a tensile impact test being at least 250 kJ/m² at all time-points; and
   iii. the tensile strength after an oxidative induction time of 0 hours and after between 1.000 to 3.000 hours at 100°C in air, said tensile strength after an oxidative induction time of between 1.000 to 3.000 hours being at least 75% of the tensile strength after an oxidative induction time of 0 hours.

The present inventors surprisingly found that if the tensile strength, the strength in a tensile impact test and the tensile strength after an oxidative induction time of the synthetic layer have the indicated values before and after extended exposure for at least 1.000 hours to 100°C, *i.e.* for 1.000 hours, 2.000 hours and 3.000 hours, an improved assessment of the life span of the moisture barrier is made when compared to nowadays life span determination methods. That is to say, according to the invention, the method of the invention provides for a synthetic layer that fulfils the requirements for having a moisture barrier function for at least 100 years. The long-term exposure tests for at least 1.000 hours start during the provision of the moisture barrier according to the method of the invention, and regularly these tests last longer than the time for provision of the moisture barrier according to the method of the invention.

It has further been found that it is advantageous to have a mineral layer which has a hydraulic conductivity of between 3,86E-10 and 1E-12 m/s or less, preferably between 9,56E-11 and 1E-12 m/s, more preferably between 7,57E-11 and 1E-12 m/s, most preferably between 4,45E-11 and 1E-12 m/s, at the start of the coverage of the landfill. With such low hydraulic conductivity of *e.g.* 1E-12 m/s or less, the moisture impermeability is sufficiently maintained by the mineral layer and subsequent synthetic layer covering said mineral layer for a prolonged period, *i.e.* 100 years or more, according to the invention.

A second aspect of the present invention relates to a moisture barrier suitable for covering a landfill, comprising:
a backing layer (1); a mineral layer (2) for covering said backing layer; a synthetic layer (3) for covering said mineral layer; a drainage layer (4) for covering said synthetic layer; and a top layer (5) for covering said drainage layer;
characterized in that
the sodium adsorption ratio in the backing layer is a value below 8, and wherein said mineral layer has a hydraulic conductivity of between 3,86E-10 and 1E-12 m/s,
and in that
for the synthetic material in the synthetic layer:
i. the tensile strength after 0 hours and after between 1.000 to 3.000 hours incubation at 100°C, said tensile strength being at least 250 kJ/m² at all time-points;
ii. the strength in a tensile impact test after 0 hours and after between 1.000 to 3.000 hours incubation at 100°C, said strength in a tensile impact test being at least 250 kJ/m² at all time-points; and
iii. the tensile strength after an oxidative induction time of 0 hours and after between 1.000 to 3.000 hours at 100°C in air, said tensile strength after an oxidative induction time of between 1.000 to 3.000 hours being at least 75% of the tensile strength after an oxidative induction time of 0 hours.

In embodiments, the sodium adsorption ratio in the backing layer is between 0.1 and 5, more preferably between 0.3 and 4.

In embodiments, said mineral layer has a hydraulic conductivity between 9,56E-11 and 1E-12 m/s, more preferably between 7,57E-11 and 1E-12 m/s, most preferably between 4,45E-11 and 1E-12 m/s at the start of the coverage.

In an embodiment, the synthetic layer comprises welded strips of foil with the welds in the foil having:
i. a strength in a tensile impact test of at least 250 kJ/m²;
ii. a strength in a peal test of at least 250 kJ/m²; and
iii. a strength in a constant load test after exposure of the welds to detergent for 500 hours at 50_{°}C, such that the foil comprising the welds is PE80 grade,
as determined before covering the synthetic layer with the drainage layer.

A third aspect of the invention relates to the use of the moisture barrier suitable for covering a landfill of the invention, for shielding a landfill. Thus, provided is the use of the moisture barrier suitable for covering a landfill of the invention, for shielding a landfill.

In one embodiment, the use of the moisture barrier suitable for covering a landfill of the invention, is for shielding a landfill for at least 20 years.

### DESCRIPTION OF THE FIGURES

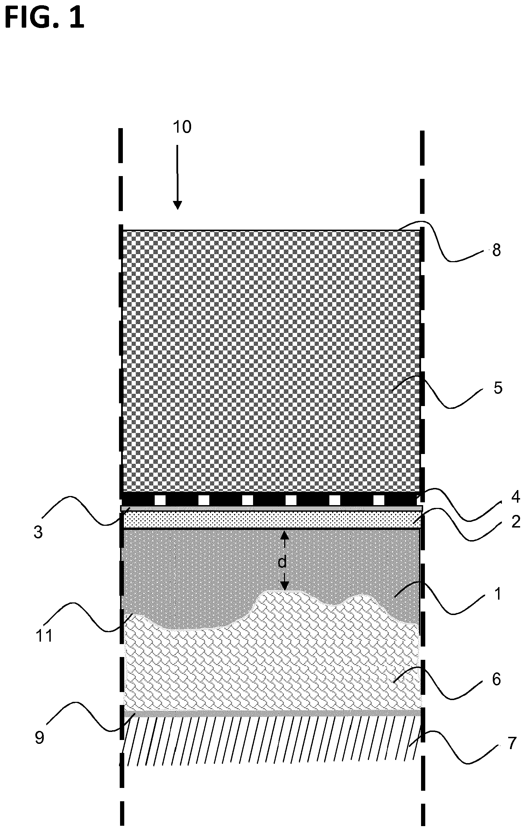

**Figure 1**. Cross sectional view of a laminar moisture barrier (10) shielding a landfill (6) on a supporting surface (7) according to an embodiment the invention. The exemplified laminar moisture barrier of the invention comprises a first, backing layer (1) with a minimal thickness (d), for covering the landfill; a second, mineral layer (2) for covering said backing layer; a third, synthetic layer (3) for covering said mineral layer; a fourth, drainage layer (4) for covering said synthetic layer; and a fifth, top layer (5) for covering said drainage layer. The package of waste is depicted with (6). The package of waste and the five consecutive layers are shown from bottom to top. The top layer is exposed to the open air at the top side (8). The bottom side of the first, backing layer of the moisture barrier of the invention forms an interface (11) with the top side of the landfill. Optionally, a shielding layer (9) (or covering layer) is located between the landfill and the supporting surface.

### DETAILED DESCRIPTION OF THE INVENTION

The present invention provides a method for providing a moisture barrier for protecting a landfill from transfer of moisture, *i.e.* penetration and/or regression of moisture, for a prolonged period of time compared to current moisture barriers. In fact, the method of the invention in essence provides a moisture barrier that prevents transfer of moisture from the landfill and into its surrounding, for a time period of at least 75 years, preferably at least 100 years. Nowadays moisture barriers obtained by conventional methods for providing a moisture barrier shield a landfill for 50 to 75 years, from transfer of moisture.

The inventors now surprisingly found an adequate method for obtaining the moisture barrier of the invention having improved moisture barrier function, by:
1. implementing in the moisture barrier a mineral layer having a hydraulic conductivity of between 3,86 E-10 m/s and 1E-12 m/s or less, preferably between 9,56E-11 and 1E-12 m/s, more preferably between 7,57E-11 and 1E-12 m/s, most preferably between 4,45E-11 and 1E-12 m/s at the start of the coverage, and
2. applying in the moisture barrier a synthetic layer having
   i. a tensile strength after 0 hours, 1.000 hours, 2.000 hours and 3.000 hours incubation at 100°C of at least 250 kJ/m²;
   ii. a strength in a tensile impact test after 0, 1.000, 2.000 and 3.000 hours incubation at 100°C of at least 250 kJ/m²; and
   iii. a tensile strength after an oxidative induction time of 0, 1.000, 2.000 and 3.000 hours at 100°C in air, wherein the tensile strength after an oxidative induction time of 1.000, 2.000 and 3.000 hours is at least 75% of the tensile strength after an oxidative induction time of 0 hours.

The inventors found that a moisture barrier comprising a mineral layer having a hydraulic conductivity of between 3,86 E-10 m/s and 1E-12 m/s or less, preferably between 9,56E-11 and 1E-12 m/s, more preferably between 7,57E-11 and 1E-12 m/s, most preferably between 4,45E-11 and 1E-12 m/s and a synthetic layer with the strengths indicated above (2. i.-iii.) according to the invention, ensures a prolonged lifespan of the barrier due to sufficiently long resistance against progressive moisture-barrier disrupting activity of landfill percolate exposed to the mineral layer and synthetic layer, and invading these layers.

Herewith, the method of the invention, that is based on the aforementioned experimental data, overcomes the problem of the lack of adequate measures to assess the life span of a moisture barrier covering a landfill with regard to its moisture barrier function. In addition, with the method of the invention, it has now become possible to assess the moisture barrier function of a moisture barrier in an improved manner by assessing the strength of the applied synthetic material in the synthetic layer, before covering the synthetic layer with the subsequent drainage layer of the moisture barrier. The inventors combined direct assessments of the strength of the synthetic layer with assessments of the strength of the synthetic layer after subjecting the synthetic layer to accelerated ageing conditions. According to the invention, the strength of the synthetic layer after exposure to accelerated ageing conditions has to be substantially the same as the strength of the synthetic layer before subjecting the synthetic layer to said accelerated ageing conditions. The accelerated ageing conditions are chosen such that these conditions reflect the condition of the synthetic layer at an age of about 100 years or more, when implemented in a moisture barrier on a landfill. Thus, the method for providing a moisture barrier for protecting a landfill from penetration and/or egression of moisture according to the invention provides for an improved moisture barrier with regard to prolonged resistance to transfer of moisture through the moisture barrier.

A first aspect of the present invention relates to a method for providing a moisture barrier (10) for protecting a landfill (6) from penetration and/or egression of moisture, comprising the steps of:
a) providing a backing layer (1) for covering the landfill; a mineral layer (2) for covering said backing layer; a synthetic layer (3) for covering said mineral layer; a drainage layer (4) for covering said synthetic layer; and a top layer (5) for covering said drainage layer;
b) covering said landfill in consecutive order with the backing layer, the mineral layer, the synthetic layer, the drainage layer and the top layer, characterized in that the sodium adsorption ratio in the backing layer is determined before covering the backing layer on the landfill with the mineral layer, with the sodium adsorption ratio having a value below 8, and wherein said mineral layer has a hydraulic conductivity of between 3,86E-10 and 1E-12 m/s; and in that
   for the synthetic material in the synthetic layer the following is determined:
   i. the tensile strength after 0 hours and after between 1.000 to 3.000 hours incubation at 100°C, said tensile strength being at least 250 kJ/m² at all time-points;
   ii. the strength in a tensile impact test after 0 hours and after between 1.000 to 3.000 hours incubation at 100°C, said strength in a tensile impact test being at least 250 kJ/m² at all time-points; and
   iii. the tensile strength after an oxidative induction time of 0 hours and after between 1.000 to 3.000 hours at 100°C in air, said tensile strength after an oxidative induction time of between 1.000 to 3.000 hours being at least 75% of the tensile strength after an oxidative induction time of 0 hours.

The long-term exposure tests for at least 1.000 hours of step c) start during the provision of the moisture barrier according to the method of the invention, and regularly these tests last longer than the time for provision of the moisture barrier according to the method of the invention. This way, it is secured that the tests according to step c) of the method of the invention are conducted with the very same batch of synthetic material which is applied in the synthetic layer of the moisture barrier according to the method of the invention.

It has specifically been found by the inventors that the combination of a mineral layer having a hydraulic conductivity expressed as a k-value of between 3,86E-10 and 1E-12 m/s and a synthetic layer having the strengths as outlined under step c) i.-iii in the method of the invention, results in the moisture barrier function of the moisture barrier obtained with the method of the invention that is prolonged to at least 75 years, preferably, at least 100 years, more preferably between 100 and 200 years, based on regulatory standards for acceptable moisture transfer through the moisture barrier, according to the invention. Nowadays methods for providing a moisture barrier provide moisture barriers with an acceptable moisture barrier function when covering a landfill for no longer than about 50 years to about 75 years. The moisture barrier provided by the method of the invention, with the hydraulic conductivity of the mineral layer and a synthetic layer having the initial strengths and the strengths after accelerated ageing as outlined under step c) i.-iii in the method of the invention, maintains its moisture barrier function for the indicated prolonged period of time independent of the type of waste comprised by the landfill covered by the moisture barrier.

One embodiment of the invention is the method according to the invention, wherein the mineral layer has a hydraulic conductivity of between 9,56E-11 and 1E-12 m/s, preferably between 7,57E-11 and 1E-12 m/s, more preferably between 4,45E-11 and 1E-12 m/s.

According to the invention, it is essential that the sodium adsorption ratio in the backing layer on the landfill is below 8. According to the invention, preferably the sodium adsorption ratio in the backing layer on the landfill is between 0.1 and 5, more preferably between 0.3 and 4, when covering said backing layer with the mineral layer according to the method of the invention, in order to establish a moisture barrier on the landfill having a barrier function which lasts for at least 75 years, preferably at least 100 years, more preferably between 100 years to 200 years. The method of the invention is particularly suitable for providing a moisture barrier with prolonged moisture barrier function, *e.g.* for at least 100 years, with these sodium adsorption ratio. That is to say, the method of the invention comprising a synthetic layer having the strengths as outlined under step c) i.-iii in the method of the invention is particularly suitable for landfills comprising a backing layer having a sodium adsorption ratio of below 8, preferably between 0.1 and 5, more preferably between 0.3 and 4. A landfill having a moisture barrier comprising a backing layer having such sodium adsorption ratio is in particular efficiently covered for a prolonged period of time, *e.g.* for at least 100 years according to the invention due to sufficiently slow migration of percolate components through the mineral layer covering the backing layer of the moisture barrier. Accumulation of percolate components in the mineral layer upon migration from the backing layer on the landfill into the mineral layer is at such an efficiently low rate that the degrading activity of the percolate with regard to the moisture barrier function of the synthetic layer, is not disrupting said moisture barrier function earlier than after a period of at least 75 years, preferably at least 100 years, more preferably between 100 years and 200 years of coverage of the landfill by the moisture barrier provided by the method of the invention.

One embodiment of the invention is the method according to the invention, wherein in step b) the sodium adsorption ratio in the backing layer is between 0.1 and 5, preferably between 0.3 and 4.

One embodiment of the invention is the method according to the invention, wherein in any of the steps c) i.-iii. the incubation time is 1.000 hours, and/or 2.000 hours and/or 3.000 hours.

One embodiment of the invention is the method according to the invention, wherein in any of the steps c) i.-iii. the incubation time is 3.000 hours.

One embodiment of the invention is the method according to the invention, wherein in step c) i. to iii. the strengths are determined before covering the synthetic layer with the drainage layer. Before covering the synthetic layer with the drainage layer, these strengths of the synthetic material in the synthetic layer are at least 250 kJ/m² for the tensile strength and the strength in a tensile impact test, before and after subjecting the synthetic material to accelerated ageing.

It is part of the invention that each material applied in the various layers of a moisture barrier obtained by the method of the invention is subjected to the common quality measures conducted according to the known regulatory methods in the art of covering landfills with a moisture barrier, in addition to the currently presented steps of the method of the invention.

From empirical data, it has been deduced that in order for a moisture barrier to have sufficient moisture barrier function lasting for 100 years or longer when covering a landfill, the hydraulic conductivity of the mineral layer should be 1E-12 m/s or less at the time of covering a landfill. However, with the method of the invention, the inventors now are the first actually assessing said hydraulic conductivity of the mineral layer at the time of covering a landfill, and are the first to subsequently make the further steps of the method for providing a moisture barrier dependent on the presence of a mineral layer having a hydraulic conductivity of between 3,86E-10 and 1E-12 m/s at the time of covering a landfill, according to the invention. That is to say, the synthetic layer is not applied on top of the mineral layer before it has been established that the mineral layer fulfils the required quality measure set by the method of the invention, *i.e.* having a hydraulic conductivity of between 3,86E-10 and 1E-12 m/s at the time of covering a landfill according to the invention.

The inventors now thus contribute two new measures to the commonly known measures for assessing moisture barriers known in the art, therewith facilitating improvement of such moisture barrier to a surprising extent. First, assessing hydraulic conductivity of the mineral layer after constructing the mineral layer on top of the backing layer and before applying the subsequent synthetic layer on top of the mineral layer, provides the opportunity to incorporate a mineral layer having a hydraulic conductivity of about between 3,86E-10 and 1E-12 m/s in the moisture barrier, according to the method of the invention. Herewith, incorporating a mineral layer in the moisture barrier having inferior hydraulic conductivity, that is to say a hydraulic conductivity of *e.g.* over 3,86E-10 m/s or over 7,57E-11 m/s at the time of constructing the moisture barrier, is prevented. Second, the step of assessing the strengths as outlined under step c) i.-iii in the method of the invention, of the synthetic material in the synthetic layer of the moisture barrier constructed by the method of the invention, now provides the opportunity to provide a moisture barrier by applying the method of the invention, that bears the qualifications required for prolonged moisture barrier function of the moisture barrier for over 75 years, preferable at least 100 years, more preferably about 100 to 200 years. The inventors now contributed to the art the surprising insight that a moisture barrier comprising a mineral layer having a hydraulic conductivity of between 3,86E-10 and 1E-12 m/s or less during construction of the moisture barrier and comprising a synthetic layer comprising synthetic material having the strengths as outlined under step c) i.-iii in the method of the invention, provides for a landfill coverage having sufficient moisture barrier function for a period of at least 75 years, preferably at least 100 years, more preferably about 100 to 200 years. As a consequence the invention thus also provides for a landfill coverage having sufficient moisture barrier function for a period of at least 20 years, according to the invention, since the moisture barrier function is sufficient for a period of at least 75 years.

Hydraulic conductivity expressed as a k-value in m/s is determined using methods commonly known in the art. See *e.g.* "Protocollen Trisoplast" (Grontmij, 1996, De Bilt, NL), "Protocollen Trisoplast Versie 3" (Grontmij Nederland B.V., 2016, Houten, NL) and the NEN NTA 8888 (2010) standard. Sodium absorption ratio is determined using methods known in the art, according to the NEN NTA 8888 (2010) standard. Tensile strength is determined using methods commonly known in the art, according to the NEN-EN-ISO 527-2 (2012, IDT) standard. Tensile impact test is performed according to a method known in the art following the NEN-EN-ISO 8256 (2004, IDT) standard. The tensile strength after an oxidative induction time is determined following established methods known in the art according to the NEN-EN-ISO 11357-6 (2013), and is determined at 200°C. Before subjecting the synthetic material of the synthetic layer to the methods for measuring the strength of the material, the material was subjected to incubations for 1.000 hours, 2.000 hours or 3.000 hours at 100°C, according to the method of the invention. These pretreatments of the synthetic material was according to *"*Protocollen geomembranen, Deel I" (J. Breen, 1999), with modifications with regard to the prolonged incubation time of 1.000 - 3.000 hours.

The method for providing a moisture barrier for protecting a landfill from penetration and/or egression of moisture according to the invention, is thus suitable for prolonged protection of a landfill for exchange of moisture for a period of 75 years or longer, *e.g.* 80 years, 85 years, 90 years, 95 years, 100 years, when compared to known methods for providing a moisture barrier for protecting a landfill from penetration and/or egression of moisture. In fact, according to the invention, the method of the invention provides for a moisture barrier that suitably protects landfills from penetration and/or egression of moisture, wherein the waste condensed in the landfill has a wide variety of origins. For example, a landfill mainly comprising waste from households is suitably protected from penetration and/or egression of moisture for a period of at least 75 years, preferably about 100 years, by a moisture barrier provided by the method of the invention.

It is one of the many benefits of the method of the invention, that the moisture barrier function of the moisture barrier provided by the method of the invention remains sufficient for at least 75 years, preferably at least 100 years, more preferably between about 100 to 200 years, independent of the waste condensed in the landfill. Of course, the moisture barrier function of the moisture barrier provided by the method of the invention then also remains sufficient for at least 20 years, independent of the waste condensed in the landfill.

Preferably, a landfill covered by a moisture barrier according to the method of the invention is covered by a backing layer comprising a combined concentration of monovalent cations and divalent cations of less than 600 meq/L, preferably between 1 to 500 meq/L, more preferably between 100 and 250 meq/L. The method of the invention provides for a moisture barrier that is particularly suitable for prolonged prevention of moisture migration through the moisture barrier, *i.e.* for at least 100 years, when the combined concentration of monovalent cations and divalent cations in the backing layer is less than 600 meq/L, preferably between 1 to 500 meq/L, more preferably between 100 and 250 meq/L. As a consequence, the method of the invention also provides for a moisture barrier that is particularly suitable for prolonged prevention of moisture migration through the moisture barrier, *i.e.* for at least 20 years, since the invention provides for a moisture barrier that is particularly suitable for prolonged prevention of moisture migration through the moisture barrier, *i.e.* for at least 100 years, according to the invention.

One embodiment of the invention is the method according to the invention, wherein in step b) the combined concentration of monovalent cations and divalent cations in the backing layer is determined before covering the backing layer on the landfill with the mineral layer, wherein said combined concentration is less than 600 meq/L, preferably between 1 to 500 meq/L, more preferably between 100 and 250 meq/L.

Said combined concentration of monovalent cations and divalent cations in the abovementioned concentration range provides for a sodium adsorption ratio in the backing layer of below 8, preferably between 0.1 and 5, more preferably between 0.3 and 4, according to the invention.

Such combined concentration of monovalent cations and divalent cations in the backing layer on the landfill influences the moisture barrier capacity of the mineral layer to such a small extent that the moisture barrier function of the mineral layer provided by the method of the invention remains adequate for at least 75 years, preferably at least 100 years, more preferably between about 100 to 200 years, according to the invention. Of course, the moisture barrier function of the mineral layer provided by the method of the invention then also remains adequate for at least 20 years, according to the invention.

One embodiment of the invention is the method according to the invention, wherein the monovalent cation comprises the cation of sodium and wherein the divalent cations comprises the cations of calcium and magnesium. In one embodiment the invention relates to a method according to the invention, wherein the monovalent cation is the cation of sodium and wherein the divalent cations are the cations of calcium and magnesium.

One embodiment of the invention is the method according to the invention, wherein the monovalent cations comprise the cation of sodium and the cation of potassium and wherein the divalent cations comprises the cations of calcium and magnesium. In one embodiment the invention relates to a method according to the invention, wherein the monovalent cations are the cations of sodium and potassium and wherein the divalent cations are the cations of calcium and magnesium.

According to the invention, the method of the invention provides a moisture barrier with particularly beneficial prolonged moisture barrier function, when the strengths according to step c) i.-iii. of the invention, of the synthetic material in the synthetic layer of the moisture barrier provided by the method of the invention, is preferably determined before covering the synthetic layer with the drainage layer. That is to say, the synthetic material applied in the method of the invention is thus now tested for its strengths according to step c) i.-iii. of the invention, once the synthetic layer is applied on top of a mineral layer, according to the method of the invention. The inventors found that prolonged moisture barrier function of the moisture barrier provided with the method of the invention is particularly efficient when the synthetic material of the synthetic layer has the strengths according to step c) i.-iii. of the invention.

It is part of the invention that the synthetic material in the synthetic layer of the moisture barrier provided by the method of the invention has a tensile strength which is similar or the same as the tensile strength of the synthetic material when subjected to between 1.000 to 3.000 hours incubation at 100°C, according to the invention, *e.g*. at 1.000, 2.000 and/or 3.000 hours incubation. The improved moisture barrier function is in particular achieved with the method of the invention when the synthetic material in the synthetic layer has a tensile strength of at least 250 kJ/m² both before and after the heat treatment at 100°C.

It is part of the invention that the synthetic material in the synthetic layer of the moisture barrier provided by the method of the invention has a strength in a tensile impact test which is similar or the same as the strength in a tensile impact test of the synthetic material when subjected to between 1.000 to 3.000 hours incubation at 100°C, according to the invention. The improved moisture barrier function is in particular achieved with the method of the invention when the synthetic material in the synthetic layer has a strength in a tensile impact test of at least 250 kJ/m² both before and after the heat treatment at 100°C, wherein the accelerated ageing by treating the synthetic material was for 1.000, 2.000 and/or 3.000 hours at 100°C.

It is part of the invention that the synthetic material in the synthetic layer of the moisture barrier provided by the method of the invention has a tensile strength which is similar or the same as the tensile strength after an oxidative induction time of between 1.000 to 3.000 hours at 100°C in air, according to the invention, *e.g.* for 1.000, 2.000 and/or 3.000 hours. The improved moisture barrier function is in particular achieved with the method of the invention when the synthetic material in the synthetic layer has a tensile strength after the oxidative induction time of at least 75% of the tensile strength of the untreated synthetic material in the synthetic layer, when exposed to the temperature of 100°C for 1.000, 2.000 and/or 3.000 hours.

The method of the invention is suitable for all known materials selected as layers commonly applied in a moisture barrier for covering a landfill. According to the invention, the method of the invention provides a moisture barrier with particularly improved moisture barrier function when the backing layer is selected from bottom ash, incinerated bottom ash, bottom ash derived from a power plant, earth, clay, sand, concrete, bentonite, asphalt, tar asphalt, tar-free asphalt, Hydrostab, mixed granulate, fly ash, molding sand, cinder, drilling mud, concrete granulate, or combinations thereof, and/or the synthetic layer is a layer of synthetic foil, and/or the drainage layer is a drainage mat, and/or the top layer is a fertile soil.

One embodiment of the invention is the method according to the invention, wherein the fertile soil comprises organic matter beneficial for the growth of *e.g.* a plant and/or a tree.

One embodiment of the invention is the method according to the invention, wherein the fertile soil applied as the top layer is substantially free of stones and other particles having *e.g.* sharp edges, for the purpose of reducing the risk of damaging other layers of the moisture barrier provided by the method of the invention.

One embodiment of the invention is the method according to the invention, wherein anyone or more of the following is selected:
i. the backing layer is selected from bottom ash, incinerated bottom ash, bottom ash derived from a power plant, earth, clay, sand, concrete, bentonite, asphalt, tar asphalt, tar-free asphalt, Hydrostab, mixed granulate, fly ash, molding sand, cinder, drilling mud, concrete granulate, or combinations thereof;
ii. the synthetic layer is a layer of synthetic foil;
iii. the drainage layer is a drainage mat; and
iv. the top layer is a fertile soil.

The inventors found that in particular, the method of the invention is suitable for application of incinerated bottom ash, bottom ash derived from a power plant, and/or asphalt as the backing layer of the moisture barrier provided by the method of the invention.

Many different materials suitable for use as a mineral layer in a moisture barrier covering a landfill are known in the art. These known materials are suitable for use in the method of the invention.

One embodiment of the invention is the method according to the invention, wherein the mineral layer is selected from a bentonite, a clay, a tertiary clay, a sand-bentonite mixture, a bentonite-polymer mixture comprising a mineral filler such as sand, a hydrogel-sand mixture, a water glass, a calcium-bentonite, a calcium-montmorilloniet, a sodium-montmirolloniet, Wyoming bentonite, a silica gel, a water glass comprising one or more of a compound selected from a granular material such as sieve sand, a silt such as sewage sludge, and a filler such as fly ash, or combinations thereof.

Particular good results with regard to the provision of a moisture barrier covering a landfill having prolonged moisture barrier function for at least 75 years, preferably at least 100 years, more preferably between 100 to 200 years, by the method of the invention, are obtained when applying bottom ash as the backing layer, a bentonite-polymer mixture comprising sand as the mineral layer, a synthetic foil as the synthetic layer, a drainage mat as the drainage layer and a fertile soil as the top layer, according to the invention. As a consequence, the provision of a moisture barrier covering a landfill having prolonged moisture barrier function for at least 20 years is also part of the invention, since the invention provides for a moisture barrier covering a landfill having prolonged moisture barrier function for at least 75 years, according to the invention.

One preferred embodiment of the invention is the method according to the invention, wherein the mineral layer is made of a bentonite-polymer mixture comprising sand, wherein the sand is substantially free of organic matter.

One embodiment of the invention is the method according to the invention, wherein the backing layer comprises bottom ash, the mineral layer is a bentonite-polymer mixture comprising sand, the synthetic layer is a synthetic foil, the drainage layer is a drainage mat, and the top layer is a fertile soil.

It has to be understood that alternative materials are equally applicable in the method of the invention, as long as the mineral layer has a hydraulic conductivity of about 1E-12 m/s or less and as long as the synthetic material in the synthetic layer has the strengths according to step c) i. to iii. of the method of the invention.

Many types of foil are known in the art of providing a moisture barrier for covering a landfill. It is part of the invention that these known foils are suitable for use as the synthetic layer in the method of the invention, as long as the foil in the synthetic layer according to the method of the invention has the strengths according to step c) i. to iii. of the invention.

One embodiment of the invention is the method according to the invention, wherein the synthetic layer is selected from the group of synthetic foils comprising polyethylene, preferably high-density polyethylene, flexible high-density polyethylene, medium density polyethylene, low-density polyethylene, linear low-density polyethylene, flexible low-density polyethylene, very low-density polyethylene, very flexible polyethylene, very flexible linear low-density polyethylene, or comprising polyvinylchloride, flexible polyvinylchloride, polyvinylchloride with chlorated polyethylene, polypropylene - polyethylene copolymer, ethylene copolymer bitumen/polyethylene, rubber-based sheet, elastomer, thermoplastic elastomer, ethylene - propylene ter polymer, ethylene - propylene ter polymer rubber, ethylene propylene diene monomer rubber, or combinations thereof, preferably high-density polyethylene or flexible high-density polyethylene.

The method of the invention proved particular suitable for providing a moisture barrier covering a landfill having prolonged moisture barrier function for at least 75 years, preferably at least 100 years, more preferably between about 100 to 200 years, when the foil in the synthetic layer is selected from synthetic foil materials high-density polyethylene and flexible high-density polyethylene. A synthetic layer of high-density polyethylene is most preferred in the method of the invention. Of course, the method of the invention then also provides for a moisture barrier covering a landfill having prolonged moisture barrier function for at least 20 years, according to the invention.

Thus, the method of the invention also proved particular suitable for providing a moisture barrier covering a landfill having prolonged moisture barrier function for at least 20 years. One embodiment of the invention is the method according to the invention, wherein the synthetic layer is high-density polyethylene or flexible high-density polyethylene. One embodiment of the invention is the method according to the invention, wherein the synthetic layer is high-density polyethylene.

A particular landfill has a relatively smooth and minimally descending top side with an angle typically of about 1° to 6°, typically about 3°, with one or more descending sides, *e.g.* sides with a typical slope of about 15° to 50°, typically about 18°, about 30°, or about 45°. The slopes of a particular landfill have descending sides typically with a ratio of 1:3, 1:2 or even 1:1. Commonly, in the art of covering a landfill with a moisture barrier, such a relatively smooth and slightly descending top side is covered with a moisture barrier comprising a layer of foil consisting of smooth foil. For the top side, the risk for the synthetic layer slipping off the landfill is relatively small, due to the horizontal geometry. At landfills having sides that descend with a given steepness of *e.g.* between about 18° to about 50°, preferably about 18°, about 30°, or about 45°, these sides are often covered by a part of the moisture barrier covering the landfill comprising rough foil in the synthetic layer comprised by the moisture barrier. Said rough foil is more resistant to slipping off the descending side of the landfill, compared to smooth foil. Smooth foil and rough foil are common types of foil known in the art and are commonly applied in methods for providing a moisture barrier for covering a landfill. It is thus part of the invention that the foil in the synthetic layer applied in the method of the invention is rough foil, smooth foil, or a combination thereof. Preferably, the method of the invention is applied with rough foil for the sides of the landfill and smooth foil for the top side of the landfill.

One embodiment of the invention is the method according to the invention, wherein the foil in the synthetic layer is rough foil, smooth foil, or a combination thereof.

The method of the invention is equally applicable for providing a moisture barrier at the top and sides of a landfill for landfills having a moisture barrier known in the art at the bottom side of the landfill, and for landfills lacking such moisture barrier at the bottom side (See Fig. 1).

One embodiment of the invention is the method according to the invention, wherein the backing layer comprises a bottom ash, the mineral layer is a bentonite-polymer mixture comprising sand, the synthetic layer is high-density polyethylene or flexible high-density polyethylene, and the drainage layer is a mat comprising a polymer selected from polyethylene, polypropylene, polyethylene terephthalate - polyamide, polyamide, or combinations thereof.

For efficient incorporation of the method of the invention in current practice of providing a coverage for a landfill, it is most convenient when the method of the invention comprises incorporation of consecutive layers in the moisture barrier, wherein the layers are commonly used in known methods for providing a moisture barrier covering a landfill. That is to say, according to the invention, not only the selection of the type of materials for the consecutive layers in the moisture barrier provided by the method of the invention is from materials conventionally applied in moisture barriers for covering a landfill, as outlined before. In addition, also the amount of applied material, and thus the thickness of the consecutive layers in the moisture barrier, is preferably the same or similar to the thickness of layers applied in current methods for providing moisture barriers known in the art. This way, current methods for providing a moisture barrier covering a landfill remain substantially unaltered and the method of the invention is applied in addition to these known methods while constructing a moisture barrier, according to the invention.

One embodiment of the invention is the method according to the invention, wherein the backing layer has an average thickness (d) of between 200 to 400 mm, preferably about 300 mm (See Fig. 1), the mineral layer has a thickness of between 30 and 500 mm, preferably between 60 mm and 90 mm, more preferably about 70 mm, the synthetic layer has a thickness of between 1 to 4 mm, preferably about 2 mm, the drainage layer is a mat with a thickness of between about 1 to 10 cm, preferably between about 1 cm to about 3 cm, more preferably about 1 cm or about 3 cm, and the top layer exerts a pressure of between 0 kPa and 60 kPa on the drainage layer, preferably between 20 kPa and 60 kPa.

Preferably, the top layer has a thickness of between 300 to 2000 mm, preferably between 400 to 1600 mm, more preferably about 800 mm.

At a landfill, the thickness of the top layer is for example about 1600 mm, such that the pressure exerted by the top layer on the drainage layer underneath the top layer does not exceed 60 kPa in the horizontal oriented surface area of the top of the landfill. At the side of the landfill, having a certain slope deviating from horizontal orientation, a top layer exceeding a thickness of 1600 mm can be applied, as long as the maximum pressure exerted on the drainage layer is 60 kPa or lower, according to the invention.

The backing layer also functions to smoothen the top side of a landfill, and if required the descending sides of a landfill, before subsequent layers of a moisture barrier are applied. Therefore, in order to achieve a smooth top side of the landfill with preferably an average thickness of about 300 mm, locally the backing layer has a larger thickness at *e.g.* at the side of holes in the landfill surface area, etc., and/or locally the backing layer has a smaller thickness.

One embodiment of the invention is the method according to the invention, wherein the mineral layer has a thickness of between 500 mm and 30 mm, preferably between 200 mm and 60 mm, more preferably between 100 and 60 mm. Preferably, the mineral layer applied in the method of the invention has a thickness of between 100 and 30 mm, and preferably the thickness is 30 mm or 40 mm or 50 mm or 60 mm or 70 mm or 80 mm or 90 mm, more preferably about 70 mm, according to the invention. One embodiment of the invention is the method according to the invention, wherein the mineral layer is between 500 mm and 30 mm and the k-value of the mineral layer is between 3,86E-10 m/s and 1E-12 m/s or less.

The mineral layer is preferably a layer of *Trisoplast* (Trisoplast Mineral Liners, The Netherlands; international patent applications WO 94/18284, WO 99/11732, WO 01/70903), consisting of a bentonite-polymer mixture comprising sand. Preferably, the Trisoplast mineral layer is between 60 mm and 90 mm, more preferably about 70 mm, although a Trisoplast layer with a thickness of between 30 mm and 60 mm, or between 90 mm and 500 mm is equally applicable, in the method of the invention. Trisoplast has the capacity to bind salts comprised by the bottom ash in the backing layer. This capacity of Trisoplast is beneficial to the life-span of the moisture barrier when Trisoplast is incorporated in the mineral layer of the moisture barrier, since salts bound to Trisoplast degrade the bentonite in the mineral layer to a far less extent compared to free salts not bound by Trisoplast.

The drainage layer is preferably a drainage mat such as an *RTN25* polyethylene drainage mat or an *RTN35* polyethylene drainage mat comprising polyurethane flakes of *Schmitz Foam Products* (The Netherlands), for example with a thickness of 3 cm, known to the skilled person. Equally preferred is a polyethylene drainage mat of 1 cm, such as the *FabriNet HF-E B120* polyethylene drainage mat of *GSE Lining Technology GmbH,* known to the skilled person. These drainage mats have a technical lifespan of at least 100 years, according to test report data following standardized procedures to assess the lifespan of a drainage mat (Y.G. Hsuan *et al.,* 2008). Of course, other drainage mats are equally applicable as well according to the invention, as long as such a mat complies with the quality measures as outlined in the standardized procedures, for having a technical lifespan of at least 100 years. These quality measures are for example laid down in TBU 0799-CPD-24 and TÜV-Nederland NEN-EN ISO 9001-2000, known to the skilled person. Drainage mats such as the RTN25 withstand a pressure of 60 kPa or less exerted for example by a top layer of soil of about 1600 mm, when the drainage mat is applied in horizontal orientation.

One embodiment of the invention is the method according to the invention, wherein the backing layer has an average thickness of about 300 mm, the mineral layer has a thickness of about 70 mm, the synthetic layer has a thickness of about 2 mm, the drainage layer has a thickness of about 3 cm or about 1 cm, and the top layer exerts a pressure of between 20 kPa and 60 kPa on the drainage layer.

One embodiment of the invention is the method of the invention, wherein the top layer has a thickness of about 800 mm.

One embodiment of the invention is the method according to the invention, wherein the drainage layer has a thickness of about 1 cm and wherein the drainage layer is a *FabriNet HF-E B120* polyethylene drainage mat.

The inventors have shown that their method of the invention provides for a moisture barrier with the aimed prolonged moisture barrier function, when the consecutive layers have these selected thicknesses, according to the invention. Likewise, these are the thicknesses for such layers in moisture barriers covering landfills, commonly applied in the art.

Typically, landfills have a surface area exceeding the size of available sheets of synthetic material such as foil applicable as the synthetic layer in the method of the invention. With a typical landfill having a surface area of between one to several hundreds of hectares, foil typically is provided as strips of foil having a width of for example between one to thirty meters, commonly between 5 to 25 meter, typically about 7 meter or typically about 24 meter or about 7,5 meter. Typically, a strip of foil such as high-density poly-ethylene (HDPE) foil has a length of between about 10 to about 200 meter, preferably about 100 meter. For example, a strip of foil such as HDPE foil has a width of about 7,5 meter and a length of about 100 meter. Consequently, the method of the invention encompasses construction of a synthetic layer, wherein the synthetic layer comprises strips of foil applied side by side. In order to achieve the prolonged barrier function with the moisture barrier obtained with the method of the invention, strips of foil are welded in the synthetic layer, according to the invention. Herewith, the method of the invention provides a moisture barrier having a prolonged moisture barrier function for at least 75 years, preferably at least 100 years, more preferably between 100 and 200 years. Also herewith, the method of the invention provides a moisture barrier having a prolonged moisture barrier function for at least 20 years, according to the invention.

One embodiment of the invention is the method according to the invention, wherein the synthetic layer is provided as strips of foil, and wherein the consecutive strips of foil covering the mineral layer are connected through either wedge welding providing wedge-welded welds with a channel or by extrusion welding, or a combination thereof.

It is part of the invention that the foil in the synthetic layer has a uniform strength throughout the synthetic layer comprised by the moisture barrier according to the method of the invention. That is to say, the strength of foil incorporated in welds linking consecutively positioned strips of foil is about the same as the strength of foil in the synthetic layer outside the welds. It are now the inventors that for the first time acknowledge the necessity of having about uniform strength throughout the complete layer of foil, including in the welds encompassed by the layer of foil in the moisture barrier provided by the method of the invention.

One embodiment of the invention is the method according to the invention comprising a further step d):
determining for the welds connecting consecutive strips of foil
i. the strength in a tensile impact test, said strength in a tensile impact test being at least 250 kJ/m²;
ii. the strength in a peal test, said strength in a peal test being at least 250 kJ/m²; and
iii. the strength in a constant load test after exposure of the welds to detergent for 500 hours at 50°C, said strength in the constant load test being such that the foil comprising the welds is PE80 grade.

One embodiment of the invention is the method according to the invention, wherein in step d) i. to iii. of the method of the invention the strengths of the welds are determined before covering the synthetic layer with the drainage layer.

According to the invention, these values for the strengths according to step d) i. to iii. of the method of the invention are sufficient and adequate for providing a moisture barrier having prolonged moisture barrier function for at least 75 years, preferably at least 100 years, more preferably between 100 and 200 years. Of course, also according to the invention, these values for the strengths according to step d) i. to iii. of the method of the invention are also sufficient and adequate for providing a moisture barrier having prolonged moisture barrier function for at least 20 years, according to the invention.

In order for the synthetic layer in the moisture barrier provided by the method of the invention to have these strengths according to step d) i. to iii. of the method of the invention, it is preferred that a weld, *i.e.* the seam, in extrusion welded strips of foil resists a certain minimal force applied to the weld directly after welding. That is to say, preferably, a weld in extrusion welded strips of foil in the synthetic layer is tested in a vacuum box test, and resists vacuum of at least about 70 kPa, preferably at least about 50 kPa, more preferably at least about 40 kPa, for at least 5 seconds, preferably at least 10 seconds, more preferably at least 20 seconds. Welds in extrusion welded strips of foil in the synthetic layer having these specifications are particularly suitable for obtaining a moisture barrier having prolonged moisture barrier function for at least 75 years, preferably at least 100 years, according to the method of the invention. As will be understood by one having ordinary skill in the art, such welds in extrusion welded strips of foil in the synthetic layer having these specifications are also particularly suitable for obtaining a moisture barrier having prolonged moisture barrier function for at least 20 years, according to the method of the invention.

As an alternative for the vacuum box test, or in addition to the vacuum box test, the welds in extrusion welded strips of foil in the moisture barrier provided by the method of the invention, are tested for their strength directly after welding by application of the spark test known in the art.

One embodiment of the invention is the method according to the invention, wherein the strength of a weld in the extrusion welded strips of foil in the synthetic layer is such that the weld resists vacuum of at least about 70 kPa, preferably at least about 50 kPa, more preferably at least about 40 kPa, for at least 5 seconds, preferably at least 10 seconds, more preferably at least 20 seconds, in a vacuum box test known in the art. Similarly, the strength of welds after any extrusion welding of foil in the synthetic layer of the moisture barrier of the invention, for welds connecting any parts of foil and for channels in the foil and the like, is assessed by applying the welds in a vacuum box test known in the art.

The welded seam created by a fusion welding process, such as wedge welding, is composed of a primary seam and a secondary track that creates an unwelded channel. The presence of an unwelded channel permits fusion seams to be tested by inflating the sealed channel with air to a predetermined pressure and observing the stability of the pressurised channel over time.

Likewise, the inventors found that welds in wedge welded strips of foil in the synthetic layer having a strength such that the weld resists a gas pressure of between about 150 kPa to about 700 kPa, preferably between about 300 kPa to about 500 kPa, for at least about 2 minutes, preferably about 5 minutes, more preferably between about 10 to about 30 minutes, most preferably about 10 minutes, with a drop in gas pressure in the weld of 15% or less, preferably at most 10%, more preferably 5% or less, in a pressurized air test, are particularly suitable for obtaining a moisture barrier having prolonged moisture barrier function for at least 75 years, preferably at least 100 years, according to the method of the invention. Of course, such welds are also particularly suitable for obtaining a moisture barrier having prolonged moisture barrier function for at least 20 years, according to the method of the invention. Said pressurized air test is known in the art. Equally preferable is a strength of the seams which is such that these seams resist an air pressure of preferably between 165 kPa and 300 kPa, preferably between 170 kPa and 240 kPa, more preferably between 170 kPa and 210 kPa.

One embodiment of the invention is the method according to the invention, wherein the strength of a weld in the wedge welded strips of foil in the synthetic layer is such that the weld resists a gas pressure of between about 150 kPa to about 700 kPa, preferably between about 300 kPa to about 500 kPa, for at least 5 minutes, preferably between about 10 to about 30 minutes, more preferably about 10 minutes, with a drop in gas pressure in the weld of 15% or less, preferably at most 10%, more preferably 5% or less, in a pressurized air test.

Covering a landfill with a moisture barrier provided by the method of the invention would provide for a measure preventing transfer of moisture from outside into the landfill, and also preventing transfer of percolate from the landfill into its surrounding.

A second aspect of the present invention relates to a moisture barrier suitable for covering a landfill said moisture barrier, comprising:
a backing layer (1); a mineral layer (2) for covering said backing layer; a synthetic layer (3) for covering said mineral layer; a drainage layer (4) for covering said synthetic layer; and a top layer (5) for covering said drainage layer;
characterized in that
   the sodium adsorption ratio in the backing layer is a value below 8, and wherein said mineral layer has a hydraulic conductivity of between 3,86E-10 and 1E-12 m/s,
and in that
   for the synthetic material in the synthetic layer:
   i. the tensile strength after 0 hours and after between 1.000 to 3.000 hours incubation at 100°C, said tensile strength being at least 250 kJ/m² at all time-points;
   ii. the strength in a tensile impact test after 0 hours and after between 1.000 to 3.000 hours incubation at 100°C, said strength in a tensile impact test being at least 250 kJ/m² at all time-points; and
   iii. the tensile strength after an oxidative induction time of 0 hours and after between 1.000 to 3.000 hours at 100°C in air, said tensile strength after an oxidative induction time of between 1.000 to 3.000 hours being at least 75% of the tensile strength after an oxidative induction time of 0 hours.

In embodiments, he sodium adsorption ratio in the backing layer is between 0.1 and 5, more preferably between 0.3 and 4.

In embodiments, said mineral layer has a hydraulic conductivity of between 9,56E-11 and 1E-12 m/s, more preferably between 7,57E-11 and 1E-12 m/s, most preferably between 4,45E-11 and 1E-12 m/s at the start of the coverage.In an embodiment, the synthetic layer comprises welded strips of foil with the welds in the foil having:
i. a strength in a tensile impact test of at least 250 kJ/m²;
ii. a strength in a peal test of at least 250 kJ/m²; and
iii. a strength in a constant load test after exposure of the welds to detergent for 500 hours at 50_{°}C, such that the foil comprising the welds is PE80 grade,
as determined before covering the synthetic layer with the drainage layer.

One embodiment of the invention is the moisture barrier covering a landfill according to the invention, wherein the combined concentration of monovalent cations and divalent cations in the backing layer is less than 600 meq/L, preferably between 1 to 500 meq/L, more preferably between 100 and 250 meq/L, such that the sodium adsorption ratio in the backing layer is below 8, preferably between 0.1 and 5, more preferably between 0.3 and 4, according to the invention.

One embodiment of the invention is the moisture barrier covering a landfill according to the invention, wherein the abovementioned monovalent cation is the cation of sodium and wherein the divalent cations are the cations of calcium and magnesium. One embodiment of the invention is the moisture barrier covering a landfill according to the invention, wherein the abovementioned monovalent cations are the cation of sodium and the cation of potassium and wherein the divalent cations are the cations of calcium and magnesium.

One embodiment of the invention is the moisture barrier covering a landfill according to the invention, wherein the combined concentration of monovalent cations and divalent cations in the backing layer is less than 600 meq/L, preferably between 1 to 500 meq/L, more preferably between 100 and 250 meq/L for at least 100 years from the start of the coverage of the landfill, and wherein the sodium adsorption ratio in the backing layer is below 8, preferably between 0.1 and 5, more preferably between 0.3 and 4 for at least 100 years from the start of the coverage of the landfill.

One embodiment of the invention is the moisture barrier covering a landfill according to the invention, wherein the combined concentration of monovalent cations and divalent cations in the backing layer is less than 600 meq/L, preferably between 1 to 500 meq/L, more preferably between 100 and 250 meq/L for at least 20 years from the start of the coverage of the landfill, and wherein the sodium adsorption ratio in the backing layer is below 8, preferably between 0.1 and 5, more preferably between 0.3 and 4 for at least 20 years from the start of the coverage of the landfill. Therefore, it is part of the invention that in the moisture barrier covering a landfill according to the invention, the sodium adsorption ratio in the backing layer remains below 8, preferably remains between 0.1 and 5, more preferably remains between 0.3 and 4 from the start of the coverage of the landfill.

One embodiment of the invention is the moisture barrier covering a landfill according to the invention, wherein the landfill is shielded against penetration and/or egression of moisture for at least 75 years, preferably at least 100 years, more preferably between about 100 to 200 years.

In one embodiment, the moisture barrier covering a landfill according to the invention, is shielding the landfill against penetration and/or egression of moisture for at least 20 years, preferably for at least 75 years, more preferably at least 100 years, most preferably between about 100 to 200 years. Thus, the invention provides for the moisture barrier covering a landfill according to the invention, which moisture barrier is shielding the landfill against penetration and/or egression of moisture.

The term "shielded" has its regular meaning throughout the application, and here refers to the prevention of between 100% to 90% of moisture at either side of the moisture barrier covering a landfill from transfer through the moisture barrier to the opposite side of the moisture barrier, preferably between 99.9% to 95%, more preferably between 99.8% to 97%, most preferably between 99.5% to 98%.

One embodiment of the invention is the moisture barrier covering a landfill according to the invention, wherein the consecutively welded strips of foil in the synthetic layer are wedge-welded or extrusion welded, or a combination thereof.

A third aspect of the invention relates to the use of the moisture barrier suitable for covering a landfill according to the invention, for shielding a landfill.

In one embodiment, the use of the moisture barrier suitable for covering a landfill according to the invention, for shielding a landfill, persists for at least 20 years. A use of the moisture barrier may persist for at least 75 years, more preferably for at least 100 years, most preferably for between about 100 and 200 years. Thus, the invention provides for the use of the moisture barrier suitable for covering a landfill of the invention, for shielding a landfill.

One embodiment of the invention is the use of the moisture barrier suitable for covering a landfill according to the invention, wherein the calculated hydraulic conductivity of the mineral layer is between about 3,86E-10 m/s and 1E-12 m/s, preferably lower than about 9,56E-11 m/s, more preferably lower than about 7.57E-11 m/s, most preferably lower than about 4,451E-11 m/s. One embodiment of the invention is the use of the moisture barrier obtainable with the method of the invention, or of the moisture barrier covering a landfill according to the invention, wherein the calculated hydraulic conductivity of the mineral layer at, at least 20 years of shielding a landfill, is between about 3,86E-10 m/s and 1E-12 m/s, preferably lower than about 9,56E-11 m/s, more preferably lower than about 7.57E-11 m/s, most preferably lower than about 4,451E-11 m/s. Thus, the invention provides for the use of the moisture barrier suitable for covering a landfill according to the invention, wherein the calculated hydraulic conductivity of the mineral layer after shielding a landfill is between about 3,86E-10 m/s and 1E-12 m/s, preferably lower than about 9,56E-11 m/s, more preferably lower than about 7.57E-11 m/s, most preferably lower than about 4,451E-11 m/s. One embodiment of the invention is the use of the moisture barrier covering a landfill according to the invention, wherein the calculated hydraulic conductivity of the mineral layer at, at least 20 years of shielding a landfill, is about 1E-12 m/s or less.

The present invention will be illustrated further by means of the following non-limiting Examples.

### EXAMPLES

### EXAMPLE 1

Figure 1 shows a cross sectional view of an exemplified laminar moisture barrier covering a landfill according to the invention. The moisture barrier is obtained with the method of the invention.

In a first example, a landfill at a test location in the Netherlands is covered with a moisture barrier provided with the method of the invention. The landfill is covered with a moisture barrier that fulfils the requirements according to Dutch regulations for moisture barriers covering a landfill and preventing transfer of moisture through the barrier for about 50 years to 75 years.

The landfill of the first example is covered with a moisture barrier of the invention provided by the method of the invention, wherein the backing layer has an average thickness of about 300 mm, the mineral layer has a thickness of about 70 mm (local deviations from the thickness of 7 cm are minus 1 cm - plus 2 cm), the synthetic layer is a foil which has a thickness of about 2 mm, the drainage layer was an *RTN25* polyethylene drainage mat comprising polyurethane flakes of *Schmitz Foam Products,* known to the skilled person, which has a thickness of about 3 cm, and the top layer is soil which has an average thickness of about 800 mm. The top layer exerts a pressure on the drainage layer of 60 kPa or less. In this first example, the backing layer comprises a bottom ash, the mineral layer is a bentonite-polymer mixture comprising sand, wherein the sand was substantially free of organic matter *(Trisoplast),* the synthetic layer is high-density polyethylene. About 55.000 m² area was covered with the Trisoplast mineral layer, fully covering the surface of the landfill.

The applied backing layer comprising a bottom ash fulfilled the criteria as laid down in regulation *BRL-2307* ("Nationale Beoordelingsrichtlijn").

In this first example, strips of foil were applied, wherein the width of the strips of foil was 7,5 m. Consecutive strips of foil in the synthetic layer were connected through application of wedge welding. After wedge welding, the strength of the welds was assessed by application of a pressure experiment, as exemplified in the Examples below. That is to say, after pressurizing the welds, the welds remained pressurized for 30 minutes substantially without a decrease of the pressure and in addition, the welds remained pressurized for 4 hours. These measures showed that the welded strips of foil were welded over the complete length of the welds.

Subsequently, tensile strength in a tensile impact test of the foil with a weld and of the foil without a weld in the synthetic layer was assessed with sample pieces of the foil. The tensile impact test was performed according to the NEN-EN-ISO 8256 (2004, IDT) standard, after exposure of the foil with and without weld for 1.000 hours, 2.000 hours and 3.000 hours to a temperature of 100°C. In addition, also the strength of the foil with and without weld was assessed in a peal test with similar sample pieces of the foil and the foil comprising a weld. The peal test was performed according to the DIN 53357 (1982) standard, after exposure of the foil with and without weld for 1.000 hours, 2.000 hours and 3.000 hours to a temperature of 100°C. These measurements revealed that the foil in the synthetic layer, *i.e.* foil with or without a weld, had a substantially uniform strength of at least 250 kJ/m².

The long-term exposure tests for at least 1.000 hours started during the provision of the moisture barrier according to the method of the invention, and these tests lasted longer than the time for provision of the moisture barrier according to the method of the invention. This way, it was secured that the tests according to the method of the invention were conducted with the very same batch of synthetic material which was applied in the synthetic layer of the moisture barrier according to the method of the invention.

Subsequently, the foil with a weld and the foil without a weld, as applied on the landfill, was subjected to a constant load test according to the NEN-EN 14576 (2005) standard. First, before measurements, the foil samples were subjected to an incubation for 500 hours at 50°C in detergent solution according to the standard. The high-density polyethylene ("PE-HD") foil that was used as the synthetic material in the synthetic layer according to the method of the invention, had PE80 grade before and after subjecting the foil with or without weld to the Constant Load Test test conditions. Strips of the applied foil had a length of about 100 meter and a width of 7,50 meter.

The hydraulic conductivity of the mineral layer was less than 1E-12 m/s in this example of a moisture barrier according to the invention. The hydraulic conductivity of the mineral layer was determined during the production of the moisture barrier according to the invention.

Subsequently, the hydraulic conductivity of the mineral layer was assessed during 56 days at time intervals of 7 days. The hydraulic conductivity of the mineral layer remained less than 1E-12 m/s.

The "PE-HD" foil applied as the synthetic material in the synthetic layer of the moisture barrier according to the method of the invention, was in this first example tested for:
1. the tensile strength after 0 hours and 1.000 hours and 2.000 hours and 3.000 hours incubation at 100°C, said test according to the NEN-EN-ISO 527-2 (2012, IDT) standard;
2. the strength in a tensile impact test after 0 hours and 1.000 hours and 2.000 hours and 3.000 hours incubation at 100°C, said test according to the NEN-EN-ISO 8256 (2004, IDT) standard; and
3. the tensile strength after an oxidative induction time of 0 hours and 1.000 hours and 2.000 hours and 3.000 hours at 100°C in air, said test according to the NEN-EN-ISO 11357-6 (2013) standard. In the test 100 gram of a foil sample derived from the synthetic layer incorporated in the moisture barrier on the landfill, was incubated in an oven with a volume of about 0,5 m³, he over filled with air. The air in the oven was refreshed each 3 hours during the incubation period of 1.000 hours or 2.000 hours or 3.000 hours at 100°C. Tensile strength was subsequently assessed at 200°C with foil samples either subjected to the accelerated ageing conditions or not subjected to such conditions.

These measurements revealed that the tensile strength was at least 250 kJ/m² at all four time-points. The strength in the tensile impact test was at least 250 kJ/m² at all four time-points. The tensile strength after an oxidative induction time of 1.000 hours, 2.000 hours or 3.000 hours was at least 75% of the tensile strength after an oxidative induction time of 0 hours.

The sodium absorption rate was below 8 for the backing layer applied in the moisture barrier of this example.

The concentrations cations present in the various exemplified batches of bottom ash applied in the backing layer, are listed in Table 1. In total, for 72 batches of bottom ash applied in the moisture barrier of the example, the cation concentrations, the conductivity and the maximum k value were determined. The conductivity for all batches was between 2.0 mS/cm and 6.4 mS/cm. The concentration sodium ions was between 1419 mg/l and 15325 mg/l. The potassium ion concentration varied amongst the 72 batches between 402 mg/l and 2676 mg/l. The calcium ion concentration was between 35 mg/l and 1115 mg/l. The magnesium ion concentration varied from batch to batch between 0.1 mg/l and 103.5 mg/l. Notably, on the landfill, all different batches of bottom ash were applied in the moisture barrier of the invention. Once the batches of bottom ash were applied in the moisture barrier of the invention, the sodium adsorption rate for the backing layer was assessed.

| Table 1: cation concentrations in exemplified batches of bottom ash applied in a moisture barrier according to the invention on a landfill | | | | | | |
|---|---|---|---|---|---|---|
| Bottom ash batch | Conductivity (mS/cm) | [Na ion] (mg/l) | [K ion] (mg/ml) | [Ca ion] (mg/ml) | [Mg ion] (mg/ml) | Calculated maximum value for k (m/s) |
| BA-a | 6.4 | 8717 | 589 | 857 | 47 | 1,47E-11 |
| BA-b | 4.1 | 4143 | 1168 | 832 | 0.8 | 1,25E-11 |
| BA-c | 5.1 | 7048 | 1834 | 172 | 0.1 | 4,65E-11 |
| BA-d | 4.4 | 3309 | 686 | 433 | 0.6 | 2,13E-11 |

Applicability of the backing layer in the method of the invention was assessed according to the method as laid down in "Alterra-rapport 290" (D. Boels & J. Breen, 2001). In Table 2, examples for the value for the hydraulic activity of the mineral layer (Trisoplast in this example) is displayed, that is required at the start of covering the exemplified landfill with the moisture barrier of the invention, in order to have a lifespan of the moisture barrier of at least 100 years, according to the invention. As outlined above, the hydraulic activity of the Trisoplast layer was less than 1E-12 m/s at the start of the covering of the landfill with the moisture barrier of the invention. Herewith, the moisture barrier has a life span of at least 100 years, according to the invention. Also herewith, the moisture barrier has a life span of at least 20 years, according to the invention.

The moisture barrier function of the moisture barrier of the first example according to the invention was at least 100 years. Accordingly, the moisture barrier function of the moisture barrier of the first example according to the invention was also at least 20 years.

### EXAMPLE 2

For five batches of bottom ash, BA1-BA5, the thickness of the mineral layer to be applied on top of a layer of about 50 cm of the bottom ash was determined, for the purpose of covering a landfill according to the invention. The mineral layer was Trisoplast.

| Table 2: hydraulic conductivity in m/s for combinations of Trisoplast mineral layer and batches of bottom ash, for three thicknesses of the mineral layer | | | |
|---|---|---|---|
| | Thickness of layer of Trisoplast | | |
| | 50 mm | 70 mm | 90 mm |
| Batch of bottom ash | | | |
| BA1 | 5,5E-11 | 7,5E-11 | 9,5E-11 |
| BA2 | 3,9E-11 | 5,3E-11 | 6,7E-11 |
| BA3 | 4,9E-11 | 6,7E-11 | 8,5E-11 |
| BA4 | 4,7E-11 | 6,5E-11 | 8,2E-11 |
| BA5 | 4,6E-11 | 6,3E-11 | 7,8E-11 |

For the bottom ash, electrical conductivity was determined, as well as the sodium adsorption ratio (sodium, potassium, magnesium, calcium). Based on these values, the hydraulic conductivity was determined for the mineral layer to be applied on the layers of bottom ash, in order to achieve the level of hydraulic conductivity during the following 100 years that is required for a lifespan of the moisture barrier of 100 years, according to the invention, when the batches of bottom ash are applied in the moisture barrier of the invention. For the calculations and procedure, see also: "Functionele levensduur van minerale afdichtingsmaterialen en kunststoffen in vloeistofdichte eindafwerking van stortplaatsen" [D. Boels & J. Breen, Alterra-rapport 290, Alterra, Research Instituut voor de Groene Ruimte, Wageningen, 2001]. See for the results of the determination the Table 2.

Based on these determined values as displayed in the Table 2, on a landfill a moisture barrier was constructed according to the invention, wherein the mineral layer was a layer of 70 mm Trisoplast on top of a layer of the indicated batches of bottom ash, according to the invention.

### EXAMPLE 3

Wedge welded strips of foil are tested in an Air Pressure Test for their strength according to a procedure known in the art and as briefly exemplified below. Remark: all parameter values for pressures and times are according to the *GW6* standard known in the art. Parameter values were set differently when tests were conducted according to a different standard known in the art.

### Air Pressure Testing - equipment used

1. An air pump capable of generating and sustaining a pressure between 170 kPa to 210 kPa.
2. A rubber hose with fittings and connections.
3. A sharp hollow needle, or other approved pressure feed device with a pressure gauge capable of reading and sustaining a pressure between 170 kPa to 300 kPa.

### Procedure for Air Testing

1. Seal both ends of the seam to be tested.
2. Insert needle or other approved pressure feed device into the sealed channel created by the fusion weld.
3. Inflate the test channel to a pressure of approximately 210 kPa, and maintain the pressure within the range listed in Initial Pressure Schedule. Close valve, observe and record initial pressure after approximately two (2) minutes.

### INITIAL PRESSURE SCHEDULE^{∗}

| HDPE (mm) | | | | |
|---|---|---|---|---|
| | Min.kPa | Min.Bar | Max.kPa | Max.Bar |
| 1.0 mm | 165 | 1.7 | 205 | 2.1 |
| 1.5 mm | 185 | 1.9 | 240 | 2.4 |
| 2.0 mm | 205 | 2.1 | 240 | 2.4 |
| 2.5 mm | 205 | 2.1 | 240 | 2.4 |

| | | | | |
|---|---|---|---|---|
| ^{∗}Initial pressure settings were read after a two-minute "relaxing period". The purpose of this "relaxing period" was to permit the air temperature and pressure to stabilise. If the two-minute stabilisation period was not required, the initial pressure reading could be recorded once stabilisation had taken place. | | | | |

The air pressure five (5) minutes was observed and recorded after the initial pressure setting is recorded. If loss of pressure exceeded the following values or if the pressure did not stabilise, faulty area was located and repaired.

### MAXIMUM PERMISSIBLE PRESSURE DIFFERENTIAL AFTER 5 MINUTES - HDPE

| HDPE (mm) | | |
|---|---|---|
| Pressure | kPa | Bar |
| 1.0 mm | 30 | 0.30 |
| 1.5 mm | 20 | 0.20 |
| 2.0 mm | 15 | 0.15 |
| 2.5 mm | 15 | 0.15 |

At the conclusion of all pressure tests, the end of the air-channel opposite the pressure gauge was cut. A decrease in gauge pressure must be observed or the air channel was considered "blocked" and, if this was occurring, the test was repeated from the point of blockage. If the point of blockage could not be found, the air channel was cut in the middle of the seam and each half was treated as a separate test.

Remove needle or other approved pressure feed device and seal resulting hole by extrusion welding.

### General Air Testing Procedures

1. The opposite end of the air channel were in all cases pierced to assure that no blockages of the air channel have occurred.
2. Whenever possible seams were air-tested prior to completing butt seams to avoid having to cut into liner. All cuts through the liner as a result of testing were repaired by extrusion welding.
3. All needle holes in air channels remaining after testing were circled by testing crew and were repaired with an extrusion bead.

### Air Pressure Testing Documentation

All of the above information was logged

### EXAMPLE 4

Spark Testing for testing the strength of seams in foil was performed according to a procedure known in the art and as exemplified below. Remark: all parameter values for pressures and times are according to the *GW6* standard known in the art. Parameter values were set differently when tests were conducted according to a different standard known in the art.

This test was used for non-destructive testing the strength of extrusion welds.

### Equipment used for spark testing

- A continuous coil high frequency spark tester with a voltage adjustable in the range 15 to 30 KV.
- Copper wire

### Procedure for Spark Testing

1. After seam preparation by grinding a continuous length of copper wire was embedded into the seam over its entire length.
2. After the extrusion weld has been completed it was allowed to cool.
3. The spark test equipment was adjusted to provide a voltage of approximately 10 kV per millimetre of geomembrane thickness being tested.
4. The spark test probe was passed slowly at a suitable height along either side and the centre of the bead of extrudate.
5. Any sparks observed jumping from the probe to the extrusion seam would indicate failure.

### Procedure for Non-complying Test

1. All areas where sparks appear were marked, if any, and repaired.
2. Repaired area, if any, was retested.

Information about spark testing was logged.

### EXAMPLE 5

Vacuum Testing for testing the strength of seams in foil was performed according to a procedure known in the art and as exemplified below. Remark: all parameter values for pressures and times are according to the *GW6* standard known in the art. Parameter values were set differently when tests were conducted according to a different standard known in the art.

This test was used to non-destructively test extrusion welds and to test fusion welds when the geometry of the weld made air pressure testing impossible or impractical or when attempting to locate the precise location of a defect believed to exist after air pressure testing.

### Equipment for Vacuum Testing

- Vacuum box assembly consisting of a rigid housing, a transparent viewing window, a soft neoprene gasket attached to the bottom, port hole or valve assembly, and a vacuum gauge.
- Vacuum pump assembly equipped with a pressure controller and pipe connection.
- A rubber pressure/vacuum hose with fittings and connections.
- A bucket and means to apply a soapy solution.
- A soapy solution.

### Procedure for Vacuum Testing

1. Excess overlap from the seam was trimmed, if any.
2. The vacuum pump was tuned on and was set to produce approximately 35 kPa of vacuum.
3. A generous amount of a strong solution of liquid detergent and water was applied to the area to be tested.
4. The vacuum box was placed over the area to be tested and sufficient downward pressure was applied to "seat" the seal strip against the liner.
5. The bleed valve was closed and the vacuum valve was opened.
6. A minimum of 35 kPa of vacuum was applied to the area as indicated by the gauge on the vacuum box.
7. It was ensured that a leak tight seal is created.
8. For a period of approximately 10 to 15 seconds, the geomembrane was examined through the viewing window for the presence of soap bubbles.
9. If no bubbles appeared after 15 seconds, the vacuum valve was closed and the bleed valve was opened, the box was moved over the next adjoining area with a minimum 75 mm overlap, and the process was repeated.

Information about vacuum testing was logged.

### EXAMPLE 6

In the moisture barrier of the invention, the mineral layer has a hydraulic conductivity, expressed as a k-value, of between 3,86E-10 m/s and 1E-12 m/s, or less, when providing the moisture barrier. This way, the hydraulic conductivity of the mineral layer after about 100 years from the provision of the moisture barrier for protecting a landfill is between 3,86E-10 m/s and 1E-12 m/s, or less, dependent on the sodium adsorption ratio of the backing layer while the moisture barrier is provided according to the invention. Typically, the sodium adsorption ratio of the backing layer in the moisture barrier of the invention is below 8.

Typically, in a moisture barrier provided by the method of the invention, with a mineral layer consisting of Trisoplast having a thickness of about 4, 5, 6, 7, 8, or 9 cm, the k-value of the mineral layer after 100 years from the provision of said moisture barrier is about 4,45E-11 m/s, 5,51E-11 m/s, 6,55E-11 m/s, 7,57E-11 m/s, 8,57E-11 m/s or 9,56E-11 m/s, respectively. See also 'Bijlage 2' in "Protocollen Trisoplast" (Grontmij, 1996, De Bilt, NL) and 'Bijlage 1' in "Protocollen Trisoplast Versie 3" (Grontmij Nederland B.V., 2016, Houten, NL).

Based on the sodium adsorption ratio and the combined concentration of monovalent cations and divalent cations in the backing layer of the moisture barrier of the invention at the time of provision of said moisture barrier according to the method of the invention, the k-value for the mineral layer after 100 years of coverage of a landfill is calculated. Only a backing layer having a sodium adsorption ratio and a combined concentration of monovalent cations and divalent cations, which in combination allow for the k-value of the mineral layer covering the backing layer, at 100 years of covering a landfill, that is aimed for according to the invention, is applied in the moisture barrier of the invention. K-values are calculated according to a method known in the art.

### REFERENCES

- Long-term performance and lifetime prediction of geosynthetics. EuroGeo4 Keynote Paper, Edingburgh 2008, Y.G. Hsuan, H.F. Schroeder, K. Rowe, W. Müller, J. Greenwood, D. Cazuffi, R.M. Koerner.

## Claims

1. Method for providing a moisture barrier (10) for protecting a landfill (6) from penetration and/or egression of moisture, comprising the steps of:
a) providing a backing layer (1) for covering the landfill; a mineral layer (2) for covering said backing layer; a synthetic layer (3) for covering said mineral layer; a drainage layer (4) for covering said synthetic layer; and a top layer (5) for covering said drainage layer; and
b) covering said landfill in consecutive order with the backing layer, the mineral layer, the synthetic layer, the drainage layer and the top layer,
**characterized in that**
the sodium adsorption ratio in the backing layer is determined before covering the backing layer on the landfill with the mineral layer, with the sodium adsorption ratio having a value below 8, and wherein said mineral layer has a hydraulic conductivity of between 3,86E-10 and 1E-12 m/s, and **in that**
for the synthetic material in the synthetic layer the following is determined:
i. the tensile strength after 0 hours and after between 1.000 to 3.000 hours incubation at 100°C, said tensile strength being at least 250 kJ/m² at all time-points;
ii. the strength in a tensile impact test after 0 hours and after between 1.000 to 3.000 hours incubation at 100°C, said strength in a tensile impact test being at least 250 kJ/m² at all time-points; and
iii. the tensile strength after an oxidative induction time of 0 hours and after between 1.000 to 3.000 hours at 100°C in air, said tensile strength after an oxidative induction time of between 1.000 to 3.000 hours being at least 75% of the tensile strength after an oxidative induction time of 0 hours.

2. Method according to claim 1, wherein the mineral layer has a hydraulic conductivity of between 9,56E-11 and 1E-12 m/s, preferably between 7,57E-11 and 1E-12 m/s, more preferably between 4,45E-11 and 1E-12 m/s.

3. Method according to claim 1 or 2, wherein in step b) the sodium adsorption ratio in the backing layer is between 0.1 and 5, preferably between 0.3 and 4.

4. Method according to any of the claims 1 to 3, wherein in any of i.-iii. the incubation time is 3.000 hours.

5. Method according to any of the claims 1 to 4, wherein in i. to iii. the strengths are determined before covering the synthetic layer with the drainage layer.

6. Method according to any of the claims 1 to 5, wherein anyone or more of the following is selected:
i. the backing layer is selected from bottom ash, incinerated bottom ash, bottom ash derived from a power plant, earth, clay, sand, concrete, bentonite, asphalt, tar asphalt, tar-free asphalt, Hydrostab, mixed granulate, fly ash, molding sand, cinder, drilling mud, concrete granulate, or combinations thereof;
ii. the synthetic layer is a layer of synthetic foil;
iii. the drainage layer is a drainage mat; and
iv. the top layer is a fertile soil.

7. Method according to any of the claims 1 to 6, wherein the mineral layer is selected from a bentonite, a clay, a tertiary clay, a sand-bentonite mixture, a bentonite-polymer mixture comprising a mineral filler such as sand, a hydrogel-sand mixture, a water glass, a calcium-bentonite, a calcium-montmorilloniet, a sodium-montmirolloniet, Wyoming bentonite, a silica gel, a water glass comprising one or more of a compound selected from a granular material such as sieve sand, a silt such as sewage sludge, and a filler such as fly ash, or combinations thereof.

8. Method according to claim 6 or 7, wherein the backing layer comprises bottom ash, the mineral layer is a bentonite-polymer mixture comprising sand, the synthetic layer is a synthetic foil, the drainage layer is a drainage mat, and the top layer is a fertile soil.

9. Method according to any of the claims 1 to 8, wherein the synthetic layer is selected from the group of synthetic foils comprising polyethylene, preferably high-density polyethylene, flexible high-density polyethylene, medium density polyethylene, low-density polyethylene, linear low-density polyethylene, flexible low-density polyethylene, very low-density polyethylene, very flexible polyethylene, very flexible linear low-density polyethylene, or comprising polyvinylchloride, flexible polyvinylchloride, polyvinylchloride with chlorated polyethylene, polypropylene - polyethylene copolymer, ethylene copolymer bitumen/polyethylene, rubber-based sheet, elastomer, thermoplastic elastomer, ethylene - propylene ter polymer, ethylene - propylene ter polymer rubber, ethylene propylene diene monomer rubber, or combinations thereof, preferably high-density polyethylene or flexible high-density polyethylene.

10. Method according to any of the claims 1 to 9, wherein the synthetic layer is high-density polyethylene.

11. Method according to any of the claims 1 to 10, wherein the synthetic layer is rough foil, smooth foil, or a combination thereof.

12. Method according to any of the claims 1 to 11, wherein the backing layer comprises a bottom ash, the mineral layer is a bentonite-polymer mixture comprising sand, the synthetic layer is high-density polyethylene, and the drainage layer is a mat comprising a polymer selected from polyethylene, polypropylene, polyester, polyethylene terephthalate, polyethylene terephthalate - polyamide, polyamide, or combinations thereof.

13. Method according to any of the claims 1 to 12, wherein the backing layer has an average thickness of between 200 to 400 mm, preferably about 300 mm, the mineral layer has a thickness of between 30 and 500 mm, preferably between 60 mm and 90 mm, more preferably about 70 mm, the synthetic layer has a thickness of between 1 to 4 mm, preferably about 2 mm, the drainage layer is a mat with a thickness of between about 1 to 10 cm, preferably about 1 cm to 3 cm, and the top layer exerts a pressure of between 0 kPa and 60 kPa on the drainage layer, preferably between 20 kPa and 60 kPa.

14. Method according to any of the claims 1 to 13, wherein the backing layer has an average thickness of about 300 mm, the mineral layer has a thickness of about 70 mm, the synthetic layer has a thickness of about 2 mm, the drainage layer has a thickness of about 3 cm or about 1 cm, and the top layer exerts a pressure of between 20 kPa and 60 kPa on the drainage layer.

15. Method according to any of the claims 1 to 14, wherein the synthetic layer is provided as strips of foil, and wherein the consecutive strips of foil covering the mineral layer are connected through either wedge welding providing wedge-welded welds with a channel or by extrusion welding, or a combination thereof.

16. Method according to claim 15, comprising a further step d):
determining for the welds connecting consecutive strips of foil i. the strength in a tensile impact test, said strength in a tensile impact test being at least 250 kJ/m²;
ii. the strength in a peal test, said strength in a peal test being at least 250 kJ/m²; and
iii. the strength in a constant load test after exposure of the welds to detergent for 500 hours at 50°C, said strength in the constant load test being such that the foil comprising the welds is PE80 grade.

17. Method according to claim 16, wherein in step d) i. to iii. the strengths of the welds are determined before covering the synthetic layer with the drainage layer.

18. Moisture barrier suitable for covering a landfill comprising:
a backing layer (1); a mineral layer (2) for covering said backing layer; a synthetic layer (3) for covering said mineral layer; a drainage layer (4) for covering said synthetic layer; and a top layer (5) for covering said drainage layer; **characterized in that**
the sodium adsorption ratio in the backing layer is a value below 8, and wherein said mineral layer has a hydraulic conductivity of between 3,86E-10 and 1E-12 m/s,
and **in that**
for the synthetic material in the synthetic layer:
i. the tensile strength after 0 hours and after between 1.000 to 3.000 hours incubation at 100°C, said tensile strength being at least 250 kJ/m² at all time-points;
ii. the strength in a tensile impact test after 0 hours and after between 1.000 to 3.000 hours incubation at 100°C, said strength in a tensile impact test being at least 250 kJ/m² at all time-points; and
iii. the tensile strength after an oxidative induction time of 0 hours and after between 1.000 to 3.000 hours at 100°C in air, said tensile strength after an oxidative induction time of between 1.000 to 3.000 hours being at least 75% of the tensile strength after an oxidative induction time of 0 hours.

19. Moisture barrier according to claim 18
wherein the sodium adsorption ratio in the backing layer is between 0.1 and 5, more preferably between 0.3 and 4;
the mineral layer has a hydraulic conductivity of between 9,56E-11 and 1E-12 m/s, more preferably between 7,57E-11 and 1E-12 m/s, most preferably between 4,45E-11 and 1E-12 m/s at the start of the coverage; and
wherein the synthetic layer comprises welded strips of foil with the welds in the foil having:
i. a strength in a tensile impact test of at least 250 kJ/m²;
ii. a strength in a peal test of at least 250 kJ/m²; and
iii. a strength in a constant load test after exposure of the welds to detergent for 500 hours at 50_{°}C, such that the foil comprising the welds is PE80 grade,
as determined before covering the synthetic layer with the drainage layer.

20. Moisture barrier according to claim 18 or 19, wherein the sodium adsorption ratio in the backing layer remains below 8, preferably remains between 0.1 and 5, more preferably remains between 0.3 and 4.

21. Use of the moisture barrier suitable for covering a landfill of any of the claims 18 to 20, for shielding a landfill.

22. Use of the moisture barrier according to claim 21, wherein the calculated hydraulic conductivity of the mineral layer after shielding a landfill is between about 3,86E-10 m/s and 1E-12 m/s, preferably lower than about 9,56E-11 m/s, more preferably lower than about 7.57E-11 m/s, most preferably lower than about 4,45E-11 m/s.

## Patentansprüche

1. Verfahren zum Bereitstellen einer Feuchtigkeitsbarriere (10) zum Schützen einer Deponie (6) vor Eindringen und/oder Austreten von Feuchtigkeit, umfassend die Schritte:
a) Bereitstellen einer Trägerschicht (1) zum Abdecken der Deponie; einer mineralischen Schicht (2) zum Abdecken der Trägerschicht; einer synthetischen Schicht (3) zum Abdecken der mineralischen Schicht; einer Drainageschicht (4) zum Abdecken der synthetischen Schicht; und einer Deckschicht (5) zum Abdecken der Drainageschicht; und
b) Abdecken der Deponie in aufeinanderfolgender Reihenfolge mit der Trägerschicht, der mineralischen Schicht, der synthetischen Schicht, der Drainageschicht und der Deckschicht,
**dadurch gekennzeichnet, dass** das Natriumadsorptionsverhältnis in der Trägerschicht bestimmt wird, bevor die Trägerschicht auf der Deponie mit der mineralischen Schicht abgedeckt wird, wobei das Natriumadsorptionsverhältnis einen Wert unter 8 hat, und wobei die mineralische Schicht eine hydraulische Leitfähigkeit zwischen 3,86E-10 und 1E-12 m/s hat;
und dadurch, dass
für das Synthetikmaterial in der synthetischen Schicht das Folgende bestimmt wird:
i. die Zugfestigkeit nach 0 Stunden und nach zwischen 1.000 bis 3.000 Stunden Inkubation bei 100°C, wobei die Zugfestigkeit zu allen Zeitpunkten mindestens 250 kJ/m² beträgt;
ii. die Schlagfestigkeit nach 0 Stunden und nach zwischen 1.000 bis 3.000 Stunden Inkubation bei 100°C, wobei die Schlagfestigkeit zu allen Zeitpunkten mindestens 250 kJ/m² beträgt; und
iii. die Zugfestigkeit nach einer oxidativen Induktionszeit von 0 Stunden und nach zwischen 1.000 bis 3.000 Stunden bei 100°C an der Luft, wobei die Zugfestigkeit nach einer oxidativen Induktionszeit zwischen 1.000 bis 3.000 Stunden mindestens 75% der Zugfestigkeit nach einer oxidativen Induktionszeit von 0 Stunden beträgt.

2. Verfahren nach Anspruch 1, wobei die mineralische Schicht eine hydraulische Leitfähigkeit zwischen 9,56E-11 und 1E-12 m/s, bevorzugt zwischen 7,57E-11 und 1E-12 m/s, stärker bevorzugt zwischen 4,45E-11 und 1E-12 m/s aufweist.

3. Verfahren nach Anspruch 1 oder 2, wobei in Schritt b) das Natriumadsorptionsverhältnis in der Trägerschicht zwischen 0,1 und 5, bevorzugt zwischen 0,3 und 4 liegt.

4. Verfahren nach einem der Ansprüche 1 bis 3, wobei in einem von i.-iii. die Inkubationszeit 3.000 Stunden beträgt.

5. Verfahren nach einem der Ansprüche 1 bis 4, wobei in i. bis iii. die Festigkeiten ermittelt werden, bevor die synthetische Schicht mit der Drainageschicht abgedeckt wird.

6. Verfahren nach einem der Ansprüche 1 bis 5, wobei eines oder mehrere der Folgenden ausgewählt wird:
i. die Trägerschicht ist ausgewählt aus Schlacke, verbrannter Schlacke, Schlacke aus einem Kraftwerk, Erde, Ton, Sand, Beton, Bentonit, Asphalt, Teer-Asphalt, teerfreiem Asphalt, Hydrostab, Mischgranulat, Flugasche, Formsand, Zinder, Bohrschlamm, Betongranulat oder Kombinationen davon;
ii. die synthetische Schicht ist eine Schicht aus Kunststofffolie;
iii. die Drainageschicht ist eine Drainagematte; und
iv. die Deckschicht ist ein fruchtbarer Boden.

7. Verfahren nach einem der Ansprüche 1 bis 6, wobei die mineralische Schicht ausgewählt ist aus einem Bentonit, einem Ton, einem tertiären Ton, einer Sand-Bentonit-Mischung, einer Bentonit-Polymer-Mischung umfassend einen mineralischen Füllstoff, wie Sand, einer Hydrogel-Sand-Mischung, einem Wasserglas, einem Calcium-Bentonit, einem Calcium-Montmorillonit, einem Natrium-Montmorillonit, Wyoming-Bentonit, einem Kieselgel, einem Wasserglas umfassend eine oder mehrere Verbindungen, ausgewählt aus einem Granulat, wie Siebsand, einem Schlamm, wie Klärschlamm, und einem Füllstoff, wie Flugasche, oder Kombinationen davon.

8. Verfahren nach Anspruch 6 oder 7, wobei die Trägerschicht Schlacke umfasst, die mineralische Schicht eine Bentonit-Polymer-Mischung umfassend Sand ist, die synthetische Schicht eine Kunststofffolie ist, die Drainageschicht eine Drainagematte ist und die Deckschicht ein fruchtbarer Boden ist.

9. Verfahren nach einem der Ansprüche 1 bis 8, wobei die synthetische Schicht ausgewählt ist aus der Gruppe von Kunststofffolien umfassend Polyethylen, bevorzugt Polyethylen hoher Dichte, flexibles Polyethylen hoher Dichte, Polyethylen mittlerer Dichte, Polyethylen niedriger Dichte, lineares Polyethylen niedriger Dichte, flexibles Polyethylen niedriger Dichte, Polyethylen sehr niedriger Dichte, sehr flexibles Polyethylen, sehr flexibles lineares Polyethylen niedriger Dichte, oder umfassend Polyvinylchlorid, flexibles Polyvinylchlorid, Polyvinylchlorid mit chloriertem Polyethylen, Polypropylen-Polyethylen-Copolymer, Ethylen-Copolymer-Bitumen/Polyethylen, Folie auf Kautschukbasis, Elastomer, thermoplastisches Elastomer, Ethylen-Propylen-Terpolymer, Ethylen-Propylen-Terpolymerkautschuk, Ethylen-Propylen-Dien-Monomerkautschuk oder Kombinationen davon, bevorzugt Polyethylen hoher Dichte oder flexibles Polyethylen hoher Dichte.

10. Verfahren nach einem der Ansprüche 1 bis 9, wobei die synthetische Schicht Polyethylen hoher Dichte ist.

11. Verfahren nach einem der Ansprüche 1 bis 10, wobei die synthetische Schicht eine raue Folie, eine glatte Folie oder eine Kombination davon ist.

12. Verfahren nach einem der Ansprüche 1 bis 11, wobei die Trägerschicht eine Schlacke umfasst, die mineralische Schicht eine Sand enthaltende Bentonit-Polymer-Mischung ist, die synthetische Schicht Polyethylen hoher Dichte ist und die Drainageschicht eine Matte ist, die ein Polymer, ausgewählt aus Polyethylen, Polypropylen, Polyester, Polyethylenterephthalat, Polyethylenterephthalat-Polyamid, Polyamid oder Kombinationen davon, umfasst.

13. Verfahren nach einem der Ansprüche 1 bis 12, wobei die Trägerschicht eine durchschnittliche Dicke zwischen 200 bis 400 mm, bevorzugt etwa 300 mm hat, die mineralische Schicht eine Dicke zwischen 30 und 500 mm, bevorzugt zwischen 60 mm und 90 mm, stärker bevorzugt etwa 70 mm hat, die synthetische Schicht eine Dicke zwischen 1 bis 4 mm, bevorzugt etwa 2 mm hat, die Drainageschicht eine Matte mit einer Dicke zwischen etwa 1 bis 10 cm, bevorzugt etwa 1 cm bis 3 cm ist und die Deckschicht einen Druck zwischen 0 kPa und 60 kPa auf die Drainageschicht ausübt, bevorzugt zwischen 20 kPa und 60 kPa.

14. Verfahren nach einem der Ansprüche 1 bis 13, wobei die Trägerschicht eine durchschnittliche Dicke von etwa 300 mm hat, die mineralische Schicht eine Dicke von etwa 70 mm hat, die synthetische Schicht eine Dicke von etwa 2 mm hat, die Drainageschicht eine Dicke von etwa 3 cm oder etwa 1 cm hat und die Deckschicht einen Druck zwischen 20 kPa und 60 kPa auf die Drainageschicht ausübt.

15. Verfahren nach einem der Ansprüche 1 bis 14, wobei die synthetische Schicht als Folienstreifen bereitgestellt wird, und wobei die aufeinanderfolgenden Folienstreifen, die die mineralische Schicht abdecken, entweder durch Keilschweißen, das Keilschweißnähte mit einem Kanal bereitstellt, oder durch Extrusionsschweißen oder eine Kombination davon verbunden werden.

16. Verfahren nach Anspruch 15, umfassend einen weiteren Schritt d):
Bestimmung für die Schweißnähte, die aufeinanderfolgende Folienstreifen verbinden,
i. der Schlagfestigkeit, wobei die Schlagfestigkeit mindestens 250 kJ/m² beträgt;
ii. der Festigkeit in einem Schältest, wobei die Festigkeit in einem Schältest mindestens 250 kJ/m² beträgt; und
iii. der Festigkeit in einem Test mit konstanter Belastung, nachdem die Schweißnähte einem Detergens für 500 Stunden bei 50°C ausgesetzt wurden, wobei die Festigkeit in dem Test mit konstanter Belastung derart ist, dass die Folie, die die Schweißnähte umfasst, PE80-Qualität aufweist.

17. Verfahren nach Anspruch 16, wobei in Schritt d) i. bis iii. die Festigkeiten der Schweißnähte bestimmt werden, bevor die synthetische Schicht mit der Drainageschicht abgedeckt wird.

18. Feuchtigkeitsbarriere, die für die Abdeckung einer Deponie geeignet ist, umfassend:
eine Trägerschicht (1); eine mineralische Schicht (2) zum Abdecken der Trägerschicht; eine synthetische Schicht (3) zum Abdecken der mineralischen Schicht; eine Drainageschicht (4) zum Abdecken der synthetischen Schicht; und
eine Deckschicht (5) zum Abdecken der Drainageschicht;
**dadurch gekennzeichnet, dass**
das Natriumadsorptionsverhältnis in der Trägerschicht einen Wert unter 8 hat, und wobei die mineralische Schicht eine hydraulische Leitfähigkeit zwischen 3,86E-10 und 1E-12 m/s hat;
und dadurch, dass
für das Synthetikmaterial in der synthetischen Schicht:
i. die Zugfestigkeit nach 0 Stunden und nach zwischen 1.000 bis 3.000 Stunden Inkubation bei 100°C, wobei die Zugfestigkeit zu allen Zeitpunkten mindestens 250 kJ/m² beträgt;
ii. die Schlagfestigkeit nach 0 Stunden und nach zwischen 1.000 bis 3.000 Stunden Inkubation bei 100°C, wobei die Schlagfestigkeit zu allen Zeitpunkten mindestens 250 kJ/m² beträgt; und
iii. die Zugfestigkeit nach einer oxidativen Induktionszeit von 0 Stunden und nach zwischen 1.000 bis 3.000 Stunden bei 100°C an der Luft, wobei die Zugfestigkeit nach einer oxidativen Induktionszeit zwischen 1.000 bis 3.000 Stunden mindestens 75% der Zugfestigkeit nach einer oxidativen Induktionszeit von 0 Stunden beträgt.

19. Feuchtigkeitsbarriere nach Anspruch 18, wobei
das Natriumadsorptionsverhältnis in der Trägerschicht zwischen 0,1 und 5, stärker bevorzugt zwischen 0,3 und 4 liegt;
die mineralische Schicht zu Beginn der Abdeckung eine hydraulische Leitfähigkeit zwischen 9,56E-11 und 1E-12 m/s, stärker bevorzugt zwischen 7,57E-11 und 1E-12 m/s, am meisten bevorzugt zwischen 4,45E-11 und 1E-12 m/s aufweist; und
wobei die synthetische Schicht geschweißte Folienstreifen umfasst, wobei die Schweißnähte in der Folie Folgendes aufweisen:
i. eine Schlagfestigkeit von mindestens 250 kJ/m²;
ii. eine Festigkeit in einem Schältest von mindestens 250 kJ/m²; und
iii. eine Festigkeit in einem Dauerbelastungstest, nachdem die Schweißnähte einem Detergens für 500 Stunden bei 50 °C ausgesetzt wurden, so dass die Folie, die die Schweißnähte umfasst, PE80-Qualität ist,
wie bestimmt, bevor die synthetische Schicht mit der Drainageschicht abgedeckt wird.

20. Feuchtigkeitsbarriere nach Anspruch 18 oder 19, wobei das Natriumadsorptionsverhältnis in der Trägerschicht unter 8 bleibt, bevorzugt zwischen 0,1 und 5 bleibt, stärker bevorzugt zwischen 0,3 und 4 bleibt.

21. Verwendung der Feuchtigkeitsbarriere, die für die Abdeckung einer Deponie geeignet ist, nach einem der Ansprüche 18 bis 20 zum Abschirmen einer Deponie.

22. Verwendung der Feuchtigkeitsbarriere nach Anspruch 21, wobei die berechnete hydraulische Leitfähigkeit der mineralischen Schicht nach dem Abschirmen einer Deponie zwischen etwa 3,86E-10 m/s und 1E-12 m/s, bevorzugt niedriger als etwa 9,56E-11 m/s, stärker bevorzugt niedriger als etwa 7,57E-11 m/s, am meisten bevorzugt niedriger als etwa 4,45E-11 m/s ist.

## Revendications

1. - Procédé pour fournir une barrière contre l'humidité (10) pour protéger une décharge (6) de la pénétration et/ou de la sortie d'humidité, comprenant les étapes consistant à :
a) fournir une couche de support (1) pour recouvrir la décharge ; une couche minérale (2) pour recouvrir ladite couche de support ; une couche synthétique (3) pour recouvrir ladite couche minérale ; une couche de drainage (4) pour recouvrir ladite couche synthétique ; et une couche supérieure (5) pour recouvrir ladite couche de drainage;
b) recouvrir ladite décharge dans un ordre séquentiel avec la couche de support, la couche minérale, la couche synthétique, la couche de drainage et la couche supérieure,
**caractérisé par le fait que** le taux d'adsorption de sodium dans la couche de support est déterminé avant de recouvrir la couche de support sur la décharge avec la couche minérale, avec le taux d'adsorption de sodium ayant une valeur au-dessous de 8, et ladite couche minérale ayant une conductivité hydraulique d'entre 3,86E-10 et 1E-12 m/s ;
et **par le fait que**
pour la matière synthétique dans la couche synthétique, ce qui suit est déterminé :
i. la résistance à la traction après 0 heure et après entre 1 000 à 3 000 heures d'incubation à 100°C, ladite résistance à la traction étant d'au moins 250 kJ/m² à tous les instants ;
ii. la résistance dans un test d'impact en traction après 0 heure et après entre 1 000 et 3 000 heures d'incubation à 100°C, ladite résistance dans un test d'impact en traction étant d'au moins 250 kJ/m² à tous les instants ; et
iii. la résistance à la traction après un temps d'induction oxydative de 0 heure et après entre 1 000 et 3 000 heures à 100°C dans l'air, ladite résistance à la traction après un temps d'induction oxydative d'entre 1 000 et 3 000 heures étant d'au moins 75 % de la résistance à la traction après un temps d'induction oxydative de 0 heure.

2. - Procédé selon la revendication 1, dans lequel la couche minérale a une conductivité hydraulique d'entre 9,56E-11 et 1E-12 m/s, de préférence entre 7,57E-11 et 1E-12 m/s, de façon davantage préférée entre 4,45E-11 et 1E-12 m/s.

3. - Procédé selon l'une des revendications 1 ou 2, dans lequel, dans l'étape b), le taux d'adsorption de sodium dans la couche de support est entre 0,1 et 5, de préférence entre 0,3 et 4.

4. - Procédé selon l'une quelconque des revendications 1 à 3, dans lequel, dans l'un quelconque de i.-iii., le temps d'incubation est de 3 000 heures.

5. - Procédé selon l'une quelconque des revendications 1 à 4, dans lequel, dans i. à iii., les résistances sont déterminées avant de recouvrir la couche synthétique avec la couche de drainage.

6. - Procédé selon l'une quelconque des revendications 1 à 5, dans lequel au moins l'un quelconque de ce qui suit est choisi :
i. la couche de support est choisie parmi les cendres résiduelles, les cendres résiduelles incinérées, les cendres résiduelles issues d'une centrale électrique, la terre, l'argile, le sable, le béton, la bentonite, l'asphalte, le goudron/asphalte, l'asphalte exempt de goudron, l'Hydrostab, le granulat mixte, les cendres volantes, le sable de moulage, la cendre, la boue de forage, le granulat de béton ou les combinaisons de ceux-ci ;
ii. la couche synthétique est une couche de feuille synthétique ;
iii. la couche de drainage est un mat de drainage ; et
iv. la couche supérieure est une terre fertile.

7. - Procédé selon l'une quelconque des revendications 1 à 6, dans lequel la couche minérale est choisie parmi une bentonite, une argile, une argile tertiaire, un mélange sable-bentonite, un mélange bentonite-polymère comprenant une charge minérale telle que du sable, un mélange hydrogel-sable, un verre soluble, un calcium-bentonite, un calcium-montmorillonite, un sodium-montmirollonite, la bentonite du Wyoming, un gel de silice, un verre soluble comprenant un ou plusieurs d'un composé choisi parmi un matériau granulaire tel que du sable de tamisage, un limon tel que des boues d'épuration, et une charge telle que des cendres volantes, ou les combinaisons de ceux-ci.

8. - Procédé selon l'une des revendications 6 ou 7, dans lequel la couche de support comprend des cendres résiduelles, la couche minérale est un mélange bentonite-polymère comprenant du sable, la couche synthétique est une feuille synthétique, la couche de drainage est un mat de drainage et la couche supérieure est une terre fertile.

9. - Procédé selon l'une quelconque des revendications 1 à 8, dans lequel la couche synthétique est choisie dans le groupe de feuilles synthétiques comprenant du polyéthylène, de préférence du polyéthylène haute densité, du polyéthylène haute densité flexible, du polyéthylène moyenne densité, du polyéthylène basse densité, du polyéthylène basse densité linéaire, du polyéthylène basse densité flexible, du polyéthylène très basse densité, du polyéthylène très flexible, du polyéthylène basse densité linéaire très flexible, ou comprenant du poly(chlorure de vinyle), du poly(chlorure de vinyle) flexible, du poly(chlorure de vinyle) avec du polyéthylène chloré, un copolymère polypropylène - polyéthylène, un copolymère d'éthylène bitume/polyéthylène, une feuille à base de caoutchouc, un élastomère, un élastomère thermoplastique, un terpolymère éthylène-propylène, un caoutchouc terpolymère éthylène-propylène, un caoutchouc éthylène propylène diène monomère, ou les combinaisons de ceux-ci, de préférence du polyéthylène haute densité ou du polyéthylène haute densité flexible.

10. - Procédé selon l'une quelconque des revendications 1 à 9, dans lequel la couche synthétique est du polyéthylène haute densité.

11. - Procédé selon l'une quelconque des revendications 1 à 10, dans lequel la couche synthétique est une feuille rugueuse, une feuille lisse ou une combinaison de celles-ci.

12. - Procédé selon l'une quelconque des revendications 1 à 11, dans lequel la couche de support comprend des cendres résiduelles, la couche minérale est un mélange bentonite-polymère comprenant du sable, la couche synthétique est du polyéthylène haute densité, et la couche de drainage est un mat comprenant un polymère choisi parmi le polyéthylène, le polypropylène, le polyester, le poly( téréphtalate d'éthylène), le poly(téréphtalate d'éthylène) - polyamide, le polyamide, ou les combinaisons de ceux-ci.

13. - Procédé selon l'une quelconque des revendications 1 à 12, dans lequel la couche de support a une épaisseur moyenne d'entre 200 et 400 mm, de préférence d'environ 300 mm, la couche minérale a une épaisseur d'entre 30 et 500 mm, de préférence d'entre 60 mm et 90 mm, de façon davantage préférée d'environ 70 mm, la couche synthétique a une épaisseur d'entre 1 et 4 mm, de préférence d'environ 2 mm, la couche de drainage est un mat ayant une épaisseur d'entre environ 1 et 10 cm, de préférence d'environ 1 cm et 3 cm, et la couche supérieure exerce une pression d'entre 0 kPa et 60 kPa sur la couche de drainage, de préférence entre 20 kPa et 60 kPa.

14. - Procédé selon l'une quelconque des revendications 1 à 13, dans lequel la couche de support a une épaisseur moyenne d'environ 300 mm, la couche minérale a une épaisseur d'environ 70 mm, la couche synthétique a une épaisseur d'environ 2 mm, la couche de drainage a une épaisseur d'environ 3 cm ou d'environ 1 cm, et la couche supérieure exerce une pression d'entre 20 kPa et 60 kPa sur la couche de drainage.

15. - Procédé selon l'une quelconque des revendications 1 à 14, dans lequel la couche synthétique est fournie sous forme de bandes de feuille, et dans lequel les bandes successives de feuille recouvrant la couche minérale sont reliées soit par soudage en coin fournissant des soudures soudées en coin avec un canal, soit par soudage par extrusion, ou une combinaison de ceux-ci.

16. - Procédé selon la revendication 15, comprenant une étape supplémentaire d) :
déterminer pour les soudures reliant des bandes successives de feuille
i. la résistance dans un test d'impact en traction, ladite résistance dans un test d'impact en traction étant d'au moins 250 kJ/m² ;
ii. la résistance dans un test de pelage, ladite résistance dans un test de pelage étant d'au moins 250 kJ/m² ; et
iii. la résistance dans un test de charge constante après exposition des soudures à un détergent pendant 500 heures à 50°C, ladite résistance dans le test de charge constante étant telle que la feuille comprenant les soudures est de qualité PE80.

17. - Procédé selon la revendication 16, dans lequel, dans l'étape d) i. à iii., les résistances des soudures sont déterminées avant de recouvrir la couche synthétique avec la couche de drainage.

18. - Barrière contre l'humidité apte à recouvrir une décharge comprenant :
une couche de support (1) ; une couche minérale (2) pour recouvrir ladite couche de support ; une couche synthétique (3) pour recouvrir ladite couche minérale ;
une couche de drainage (4) pour recouvrir ladite couche synthétique ; et une couche supérieure (5) pour
recouvrir ladite couche de drainage ;
**caractérisée par le fait que**
le taux d'adsorption de sodium dans la couche de support est une valeur au-dessous de 8, et ladite couche minérale ayant une conductivité hydraulique d'entre 3,86E-10 et 1E-12 m/s ;
et **par le fait que**
pour le matériau synthétique dans la couche synthétique :
i. la résistance à la traction après 0 heure et après entre 1 000 à 3 000 heures d'incubation à 100°C, ladite résistance à la traction étant d'au moins 250 kJ/m² à tous les instants ;
ii. la résistance dans un test d'impact en traction après 0 heure et après entre 1 000 et 3 000 heures d'incubation à 100°C, ladite résistance dans un test d'impact en traction étant d'au moins 250 kJ/m² à tous les instants ; et
iii. la résistance à la traction après un temps d'induction oxydative de 0 heure et après entre 1000 et 3000 heures à 100°C dans l'air, ladite résistance à la traction après un temps d'induction oxydative d'entre 1 000 et 3 000 heures étant d'au moins 75 % de la résistance à la traction après un temps d'induction oxydative de 0 heure.

19. - Barrière contre l'humidité selon la revendication 18 dans laquelle le taux d'adsorption de sodium dans la couche de support est entre 0,1 et 5, de façon davantage préférée entre 0,3 et 4 ;
la couche minérale a une conductivité hydraulique d'entre 9,56E-11 et 1E-12 m/s, de façon davantage préférée entre 7,57E-11 et 1E-12 m/s, de la façon que l'on préfère le plus entre 4,45E-11 et 1E-12 m/s au début de la couverture ; et dans laquelle la couche synthétique comprend des bandes soudées de feuille avec les soudures dans la feuille ayant
i. une résistance dans un test d'impact en traction d'au moins 250 kJ/m² ;
ii. une résistance dans un test de pelage d'au moins 250 kJ/m2 ; et
iii. une résistance dans un test de charge constante après exposition des soudures à un détergent pendant 500 heures à 50°C, de telle sorte que la feuille comprenant les soudures soit de qualité PE80,
tel que déterminé avant de recouvrir la couche synthétique avec la couche de drainage.

20. - Barrière d'humidité selon l'une des revendications 18 ou 19, dans laquelle le taux d'adsorption de sodium dans la couche de support reste au-dessous de 8, de préférence reste entre 0,1 et 5, de façon davantage préférée reste entre 0,3 et 4.

21. - Utilisation de la barrière d'humidité apte à recouvrir une décharge selon l'une quelconque des revendications 18 à 20, pour protéger une décharge.

22. - Utilisation de la barrière d'humidité selon la revendication 21, dans laquelle la conductivité hydraulique calculée de la couche minérale après protection d'une décharge est entre environ 3,86E-10 m/s et 1E-12 m/s, de préférence inférieure à environ 9,56E-11 m/s, de façon davantage préférée inférieure à environ 7,57E-11 m/s, de la façon que l'on préfère le plus inférieure à environ 4,45E-11 m/s.
